# EUROPEAN PATENT APPLICATION

(11) **EP 4 518 221 A1**
(43) Date of publication of application: **05.03.2025**
(21) Application number: 23795101.7
(22) Date of filing: 18.04.2023
(51) Int. Cl.: H04L 5/00

(54) **METHOD FOR TRANSMITTING PHYSICAL UPLINK SHARED CHANNEL, AND DEVICE AND STORAGE MEDIUM**

(30) Priority: 25.04.2022 CN 202210444427; 09.10.2022 CN 202211228991
(71) Applicant: Datang Mobile Communications Equipment Co., Ltd., Beijing 100085 (CN)
(72) Inventor: SONG, Lei, Beijing 100085 (CN); HUANG, Qiuping, Beijing 100085 (CN); GAO, Qiubin, Beijing 100085 (CN); LI, Hui, Beijing 100085 (CN); LUO, Yajuan, Beijing 100085 (CN)
(74) Representative: Cabinet Nony
(86) International application number: PCT/CN2023/088905
(87) International publication number: WO 2023/207668

(57) **Abstract**

The present disclosure relates to the technical field of communications, and discloses a transmission method for a physical uplink shared channel, a device, and a storage medium, which are used to solve problems that in the related art, correct transmission of the PUSCH cannot be effectively ensured, and a transmission performance of the PUSCH is reduced. The method comprises: in a case that a terminal device detects a sounding reference signal resource indicator (SRI) in DCI or obtains the SRI included in a CG configuration, determining (101, 201) an association between a specified parameter and a sounding reference signal (SRS) resource set based on indication information of a network device or a predefined rule; determining (102, 202) the SRS resource set based on the association; determining (103, 203) an SRS resource based on the SRS resource set; and transmitting (104, 204) the PUSCH based on the SRS resource. In the implementation, the SRS resource set for transmitting the PUSCH is determined by adopting an indication of a network side or the predefined rule, thereby ensuring the correct transmission of the PUSCH, and improving the transmission performance of the PUSCH.

## Description

### CROSS-REFERENCE TO RELATED APPLICATIONS

The present disclosure claims priority to Chinese patent application No. 202210444427.5 filed on April 25, 2022 to China Patent Office, and entitled "Transmission Method for Physical Uplink Shared Channel, Device, and Storage Medium", the entire content of which is incorporated herein by reference. The present disclosure claims priority to Chinese patent application No. 202211228991.X filed on October 09, 2022 to China Patent Office, and entitled "Transmission Method for Physical Uplink Shared Channel, Device, and Storage Medium", the entire content of which is incorporated herein by reference.

### TECHNICAL FIELD

The present disclosure relates to the technical field of communications, in particular to a transmission method for a physical uplink shared channel, a device, and a storage medium.

### BACKGROUND

A sounding reference signal resource set (SRS resource set) includes a plurality of SRS resources. When a terminal device detects downlink control information (DCI) or obtains a configured grant (CG) configuration, a sounding reference signal resource indicator (SRI) is detected from the DCI or obtained from the CG configuration. Which SRS resource to use may be determined according to the SRI, and then a physical uplink shared channel (PUSCH) is transmitted to a network side based on the SRS resource.

However, when the PUSCH is scheduled independently by using a multi-downlink control information (DCI) framework, or the PUSCH is transmitted simultaneously through a plurality of CG configurations, or the PUSCH is scheduled through the DCI and the PUSCH is transmitted through the CG configuration simultaneously, if a plurality of SRS resource sets are configured, which SRS resource set the SRI in the DCI or the CG configuration acts on cannot be determined by a terminal. As a result, correct transmission of the PUSCH cannot be effectively ensured, and a transmission performance of the PUSCH is reduced.

### SUMMARY

In order to solve the above problems, the present disclosure provides a transmission method for a physical uplink shared channel, a device, and a storage medium, which may enable a terminal device to determine an SRS resource set indicated by an SRI in DCI or in a CG configuration, thereby ensuring correct transmission of the PUSCH is ensured, and improving a transmission performance of the PUSCH.

In a first aspect, the present disclosure provides a transmission method for a physical uplink shared channel, applied to a terminal device, comprising:
determining, in a case that a sounding reference signal resource indicator (SRI) is included in a configured grant (CG) configuration or in downlink control information (DCI), an association between a specified parameter and a sounding reference signal (SRS) resource set based on indication information of a network device and/or a predefined rule;
determining the SRS resource set based on the association;
determining an SRS resource based on the SRS resource set; and
transmitting the PUSCH based on the SRS resource.

In the implementation, based on indication of the network device or the predefined rule, the SRS resource set indicated by the SRI in the DCI or in the CG configuration is determined, thereby ensuring correct transmission of the PUSCH, and improving a transmission performance of the PUSCH.

In some implementations, the specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, a capability value index of a terminal device, an SRS resource set index, a CG index, or a specified radio resource control (RRC) parameter.

In the implementation, a correspondence with the adopted SRS resource set can be established through the indication information on a network side or the predefined rule by adopting corresponding parameters, which is more convenient to implement, and a capability to determine the SRS resource set may be realized by multiplexing the existing parameters.

In the implementation, which SRS resource set is adopted to transmit the PUSCH can be indicated to the terminal device by configuring some parameters, and the configuration of these parameters is simpler to realize, which can facilitate the realization of the indication to the terminal device.

In some implementations, the indication information includes at least one of the following:
CORESETPoolIndex configured in a high-level parameter of the SRS resource set;
an SRS resource set index configured under a control resource set (CORESET);
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate the capability value index of the terminal device; or
a third information indication field used to indicate a TCI state.

In the implementation, which SRS resource set is adopted may be indicated to the terminal device through some information fields in the DCI, so that multiplexing of DCI information is realized.

In some implementations, the indication information includes the CORESETPoolIndex configured in the high-level parameter of the SRS resource set, and determining the SRS resource set comprises:
detecting the CORESET used to transmit the DCI or the PDCCH;
obtaining CORESETPoolIndex of the CORESET; and
selecting an SRS resource set whose CORESETPoolIndex configured in the high-level parameter of the SRS resource set is the same as the CORESETPoolIndex of the CORESET from at least one SRS resource set for transmitting the PUSCH.

In the implementation, the adopted SRS resource may be determined based on the SRS resource set associated with the CORESET or the CORESETPoolIndex, and only the CORESET or the CORESETPoolIndex needs to be known during realization to determine the SRS resource, which is easy to realize.

In some implementations, the indication information includes the SRS resource set index configured under the CORESET, and determining the SRS resource set comprises:
detecting the CORESET used to transmit the DCI or the PDCCH; and
determining an SRS resource set corresponding to the SRS resource set index configured under the CORESET for transmitting the PUSCH.

In the implementation, the SRS resource set may be determined from the high-level parameter of the SRS resource set, and a realization mode is simple.

In some implementations, the indication information includes the capability value index of the terminal device configured for the CORESET, and determining the SRS resource set comprises:
detecting the CORESET used to transmit the DCI or the PDCCH;
obtaining the capability value index of the terminal device configured for the CORESET; and
determining an SRS resource set corresponding to the capability value index of the terminal device configured for the CORESET for transmitting the PUSCH.

In the implementation, the SRS resource set may be determined based on the CORESET, and a realization mode is simple.

In some implementations, the indication information of the network device includes the capability value index of the terminal device configured for the CORESET, and determining the SRS resource set comprises:
detecting the CORESET used to transmit the DCI;
obtaining the capability value index of the terminal device configured for the CORESET; and
determining an SRS resource set corresponding to a configured capability value for transmitting the PUSCH.

In the implementation, the capability value index of the terminal device may be configured for the CORESET, then the SRS resource set is determined, and a realization mode is simple.

In some implementations, the indication information includes the specified information field in the DCI, and determining the SRS resource set comprises:
obtaining the specified information field in the DCI; and
determining an SRS resource set indicated by the specified information field for transmitting the PUSCH.

In the implementation, the SRS resource set may be determined based on the information field of the DCI, and a realization mode is simple.

In some implementations, the indication information includes the specified information field in the DCI, and before obtaining the specified information field in the DCI, the method further comprises:
transmitting capability information for supporting the specified information field in the DCI to the network device.

In the implementation, a case may be avoided that when a plurality of TRPs perform scheduling independently, each of the TRPs performs an indication of the SRS resource set or an indication of the capability value independently, which may lead to the indication of the same SRS resource set by a plurality of pieces of DCI.

In some implementations, the indication information includes the TCI state configuration, and determining the SRS resource set comprises:
determining the TCI state configuration associated with the DCI; and
determining an SRS resource set associated with the TCI state configuration for transmitting the PUSCH.

In the implementation, the SRS resource set may be determined based on the TCI state configuration, and a realization mode is simple.

In some implementations, the TCI state configuration associated with the DCI includes at least one of the following:
at least one TCI state activated by MAC-CE signaling;
at least one applied TCI state; or
a TCI state associated with a CORESET where the DCI is located or associated with CORESETPoolIndex configured for the CORESET.

In the implementation, the adopted SRS resource set may be determined by configuring different TCI state configurations, and a realization mode is simple.

In some implementations, the SRS resource set associated with the TCI state configuration includes at least one of the following:
an SRS resource set associated with a TCI state configured by RRC signaling; or
an SRS resource set included in TCI state signaling activated by an MAC CE.

In the implementation, the adopted SRS resource set may be determined by configuring different TCI state configurations, and a realization mode is simple.

In some implementations, the specified parameter includes the detected CORESET used to transmit the DCI or the PDCCH, and determining the SRS resource set based on the association comprises:
detecting the CORESET used to transmit the DCI or the PDCCH; and
selecting an SRS resource set associated with the CORESET from at least one SRS resource set for transmitting the PUSCH;
or, the specified parameter includes the CORESET used to transmit the DCI or the PDCCH and the CORESETPoolIndex, and determining the SRS resource set based on the association comprises:
detecting the CORESET used to transmit the DCI or the PDCCH; and
selecting an SRS resource set associated with the CORESET or the CORESETPoolIndex of the CORESET from at least one SRS resource set for transmitting the PUSCH.

In some implementations, based on the predefined rule, the association is determined based on the configured SRS resource set or based on the capability value index reported by the terminal device.

In some implementations, the specified parameter includes the CORESET used to transmit the DCI or the physical downlink control channel (PDCCH), the association includes an association between the CORESET and the SRS resource set, and determining the association based on the configured SRS resource set comprises:
a first specified CORESET or all first specified CORESETs corresponds to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

In some implementations, in a case that the specified parameter includes the CORESET, the association includes a first relationship between the CORESET and the capability value index, and includes a second relationship between the capability value index and the SRS resource set, and determining the association based on a capability value reported by the terminal device comprises:
establishing, in a case that the terminal device reports one capability value index, the first relationship between the one capability value index and a second specified CORESET or all CORESETs, and establishing the second relationship between the one capability value index and a specified SRS resource set; or,
establishing, in a case that the terminal device reports a plurality of capability value indexes, the first relationship between a part of the plurality of capability value indexes and a CORESET that is not configured with CORESETPoolIndex or a CORESET whose CORESETPoolIndex value is a first value, establishing the first relationship between a remaining other part of the plurality of the capability value indexes and a CORESET whose CORESETPoolIndex value is a second value, and establishing the second relationship between each capability value index and an SRS resource set specified by each capability value index.

In some implementations, selecting the SRS resource set associated with the CORESET or the CORESETPoolIndex of the CORESET from the at least one SRS resource set comprises:
obtaining the capability value index associated with the detected CORESET based on the first relationship; and
determining the SRS resource set associated with the capability value index based on the second relationship.

In some implementations, the indication information includes the CORESETPoolIndex configured in the high-level parameter of the SRS resource set, and determining the SRS resource set comprises:
obtaining the CORESETPoolIndex associated with the CG configuration or the SRI; and
selecting an SRS resource set whose CORESETPoolIndex configured in the high-level parameter of the SRS resource set is the same as the CORESETPoolIndex associated with the CG configuration or the SRI from at least one SRS resource set for transmitting the PUSCH.

In some implementations, the indication information includes the SRS resource set index associated with the CG configuration or the SRI, and determining the SRS resource set comprises:
determining an SRS resource set corresponding to the SRS resource set index associated with the CG configuration or the SRI for transmitting the PUSCH.

In some implementations, the indication information includes the capability value index of the terminal device associated with the CG configuration or the SRI, and determining the SRS resource set comprises:
determining an SRS resource set corresponding to the capability value index of the terminal device associated with the CG configuration or the SRI for transmitting the PUSCH.

In some implementations, the indication information includes the TCI state configuration, and determining the SRS resource set comprises:
determining a TCI state configuration associated with the CG configuration or the SRI; and
determining an SRS resource set associated with the TCI state configuration for transmitting the PUSCH.

In some implementations, based on the predefined rule, the association includes:
an association between the CG index configured in the CG configuration and the SRS resource set; or,
an association between the specified RRC parameter configured in the CG configuration and the SRS resource set.

In some implementations, the association between the CG index configured in the CG configuration and the SRS resource set includes:
an odd CG index corresponds to one SRS resource set of two SRS resource sets configured by the network device, and an even CG index corresponds to the other SRS resource set.

In the implementation, the SRS resource set is determined based on the CG index, and a realization mode is simple.

In some implementations, the CG configuration includes a second CG index of another associated CG.

In some implementations, the association between the specified RRC parameter configured in the CG configuration and the SRS resource set includes:
in a case that a first CG index corresponding to the CG configuration is smaller than the second CG index, the first CG index corresponds to a first SRS resource set of two SRS resource sets configured by the network device; and
in a case that the first CG index corresponding to the CG configuration is greater than the second CG index, the first CG index corresponds to a second SRS resource set of the two SRS resource sets configured by the network device.

In the implementation, the SRS resource set is determined based on the second CG index (the specified RRC parameter), and a realization mode is simple.

In some implementations, the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

In the implementation, the SRS resource set is determined based on the specified RRC parameters (the first RRC parameter and the second RRC parameter), and a realization mode is simple.

In some implementations, the CG configuration does not include information associated with other CGs, and the association includes:
the CG configuration corresponds to one SRS resource set of a plurality of SRS resource sets configured by the network device.

In a second aspect, a transmission method for a physical uplink shared channel is provided and applied to a network device, and comprises:
configuring indication information for a terminal device; and
transmitting the indication information to the terminal device;
wherein the indication information is used to determine an association between a specified parameter and a sounding reference signal (SRS) resource set.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a configured grant (CG) index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with a CG configuration or a sounding reference signal resource indicator (SRI);
an SRS resource set index associated with the CG configuration or the SRI;
a capability value index of the terminal device associated with the CG configuration or the SRI;
a CG index configured in the CG configuration; or
a specified radio resource control (RRC) parameter configured in the CG configuration.

In some implementations, the specified information field in the DCI includes at least one of the following:
a first information indication field used to indicate the SRS resource set;
a second information indication field used to indicate a capability value of the terminal device; or
a third information indication field used to indicate a TCI state.

In some implementations, the method further comprises:
receiving capability information about whether the specified information field in the DCI is supported transmitted by the terminal device; and
configuring, in a case that the capability information indicates that the terminal device supports the specified information field in the DCI, the indication information based on the specified information field in the DCI.

In some implementations, the indication information includes a TCI state configuration, and configuring the indication information used to indicate the SRS resource set for the terminal device comprises:
configuring, when radio resource control (RRC) signaling configures a TCI state, an associated SRS resource set index for each TCI state; or,
configuring, when a media access control unit (MAC CE) activates TCI stated, an SRS resource set index associated with the TCI state; or,
associating each TCI state indicated in the DCI with one SRS resource set index respectively.

In some implementations, the method further comprises:
configuring at least two physical uplink shared channel (PUSCH) transmission parameters for the terminal device, wherein values of the at least two PUSCH transmission parameters is the same or different.

As a result, the terminal device may be scheduled by two pieces of DCI or PDCCHs (i.e., TRPs) independently to perform transmission by adopting different transmission methods. For example, the terminal device is scheduled to perform transmission by adopting a codebook-based PUSCH transmission mode and a non-codebook-based PUSCH transmission mode respectively, thus the flexibility of scheduling of the network device is increased, and a system performance is improved.

In some implementations, the method further comprises:
configuring CG indexes of other associated CGs in a CG configuration.

In a third aspect, the present disclosure provides a terminal device, comprising a memory, a transceiver, and a processor.

The memory is configured to store a computer program.

The transceiver is configured to receive and transmit information under control of the processor.

The processor is configured to read the computer program in the memory and execute following steps:
determining, in a case that a sounding reference signal resource indicator (SRI) is included in a configured grant (CG) configuration or in downlink control information (DCI), an association between a specified parameter and a sounding reference signal (SRS) resource set based on indication information of a network device or a predefined rule;
determining the SRS resource set based on the association;
determining an SRS resource based on the SRS resource set; and
transmitting a physical uplink shared channel (PUSCH) based on the SRS resource.

In some implementations, the specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, a capability value index of a terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a control resource set (CORESET);
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate the capability value index of the terminal device; or
a third information indication field used to indicate a TCI state.

In some implementations, the indication information includes the CORESETPoolIndex configured in the high-level parameter of the SRS resource set, and the processor is specifically configured to:
detect the CORESET used to transmit the DCI or the PDCCH;
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

In some implementations, the indication information includes the SRS resource set index configured under the CORESET, and the processor is specifically configured to:
detect the CORESET used to transmit the DCI or the PDCCH; and
determine an SRS resource set corresponding to the SRS resource set index configured under the CORESET for transmitting the PUSCH.

In some implementations, the indication information includes the capability value index of the terminal device configured for the CORESET, and the processor is specifically configured to:
detect the CORESET used to transmit the DCI or the PDCCH;
obtain the capability value index of the terminal device configured for the CORESET; and
determine an SRS resource set corresponding to the capability value index of the terminal device configured for the CORESET for transmitting the PUSCH.

In some implementations, the indication information includes the specified information field in the DCI, and the processor is specifically configured to:
obtain the specified information field in the DCI; and
determine an SRS resource set indicated by the specified information field for transmitting the PUSCH.

In some implementations, the indication information includes the specified information field in the DCI, and before obtaining the specified information field in the DCI, the processor is further configured to:
transmit capability information for supporting the specified information field in the DCI to the network device.

In some implementations, the indication information includes the TCI state configuration, and the processor is specifically configured to:
determine the TCI state configuration associated with the DCI; and
determine an SRS resource set associated with the TCI state configuration for transmitting the PUSCH.

In some implementations, the TCI state configuration associated with the DCI includes at least one of the following:
at least one TCI state activated by MAC-CE signaling;
at least one applied TCI state; or
a TCI state associated with a CORESET where the DCI is located or associated with CORESETPoolIndex configured for the CORESET.

In some implementations, the SRS resource set associated with the TCI state configuration includes at least one of the following:
an SRS resource set associated with a TCI state configured by RRC signaling; or
an SRS resource set included in TCI state signaling activated by an MAC CE.

In some implementations, the specified parameter includes the detected CORESET used to transmit the DCI or the PDCCH, and the processor is specifically configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the processor is specifically configured to:
detect the CORESET used to transmit the DCI or the PDCCH; and
select an SRS resource set associated with the CORESET or the CORESETPoolIndex of the CORESET from at least one SRS resource set for transmitting the PUSCH.

In some implementations, for the predefined rule, the association is determined based on the configured SRS resource set or based on the capability value index reported by the terminal device.

In some implementations, the specified parameter includes the CORESET used to transmit the DCI or the physical downlink control channel (PDCCH), the association includes an association between the CORESET and the SRS resource set, and the processor is further configured to:
determine the association based on the configured SRS resource set by adopting a following mode:
a first specified CORESET or all first specified CORESETs corresponds to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

In some implementations, in a case that the specified parameter includes the CORESET, the association includes a first relationship between the CORESET and the capability value index, and includes a second relationship between the capability value index and the SRS resource set, and the processor is further configured to:
determine the association based on a capability value reported by the terminal device by adopting a following method:
establishing, in a case that the terminal device reports one capability value index, the first relationship between the one capability value index and a second specified CORESET or all CORESETs, and establishing the second relationship between the one capability value index and a specified SRS resource set; or,
establishing, in a case that the terminal device reports a plurality of capability value indexes, the first relationship between a part of the plurality of capability value indexes and a CORESET that is not configured with CORESETPoolIndex or a CORESET whose CORESETPoolIndex value is a first value, establishing the first relationship between a remaining other part of the plurality of the capability value indexes and a CORESET whose CORESETPoolIndex value is a second value, and establishing the second relationship between each capability value index and an SRS resource set specified by each capability value index.

In some implementations, the processor is specifically configured to
obtain the capability value index associated with the detected CORESET based on the first relationship; and
determine the SRS resource set associated with the capability value index based on the second relationship.

In some implementations, the indication information includes the CORESETPoolIndex configured in the high-level parameter of the SRS resource set, and the processor is specifically configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

In some implementations, the indication information includes the SRS resource set index associated with the CG configuration or the SRI, and the processor is specifically configured to:
determine an SRS resource set corresponding to the SRS resource set index associated with the CG configuration or the SRI for transmitting the PUSCH.

In some implementations, the indication information includes the capability value index of the terminal device associated with the CG configuration or the SRI, and the processor is specifically configured to:
determine an SRS resource set corresponding to the capability value index of the terminal device associated with the CG configuration or the SRI for transmitting the PUSCH.

In some implementations, the indication information includes the TCI state configuration, and the processor is specifically configured to:
determine a TCI state configuration associated with the CG configuration or the SRI; and
determine an SRS resource set associated with the TCI state configuration for transmitting the PUSCH.

In some implementations, for the predefined rule, the association includes:
an association between the CG index configured in the CG configuration and the SRS resource set; or,
an association between the specified RRC parameter configured in the CG configuration and the SRS resource set.

In some implementations, the association between the CG index configured in the CG configuration and the SRS resource set includes:
an odd CG index corresponds to one SRS resource set of two SRS resource sets configured by the network device, and an even CG index corresponds to the other SRS resource set.

In some implementations, the CG configuration includes a second CG index of another associated CG.

In some implementations, the association between the specified RRC parameter configured in the CG configuration and the SRS resource set includes:
in a case that a first CG index corresponding to the CG configuration is smaller than the second CG index, the first CG index corresponds to a first SRS resource set of two SRS resource sets configured by the network device; and
in a case that the first CG index corresponding to the CG configuration is greater than the second CG index, the first CG index corresponds to a second SRS resource set of the two SRS resource sets configured by the network device.

In some implementations, the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

In some implementations, the CG configuration does not include information associated with other CGs, and the association includes:
the CG configuration corresponds to one SRS resource set of a plurality of SRS resource sets configured by the network device.

In a fourth aspect, the present disclosure further provides a network device, comprising a memory, a transceiver, and a processor.

The memory is configured to store a computer program.

The transceiver is configured to receive and transmit information under control of the processor.

The processor is configured to read the computer program in the memory and execute following steps:
configuring indication information for a terminal device; and
transmitting the indication information to the terminal device;
wherein the indication information is used to determine an association between a specified parameter and a sounding reference signal (SRS) resource set.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate a capability value of the terminal device; or
a third information indication field used to indicate a TCI state.

In some implementations, for the specified information field in the DCI, the processor is further configured to:
receive capability information about whether the specified information field in the DCI is supported transmitted by the terminal device; and
configure, in a case that the capability information indicates that the terminal device supports the specified information field in the DCI, the indication information based on the specified information field in the DCI.

In some implementations, the indication information includes the TCI state configuration, and the processor is specifically configured to:
configure, when radio resource control (RRC) signaling configures a TCI state, an associated SRS resource set index for each TCI state; or,
configure, when a media access control unit (MAC CE) activates a TCI state, an SRS resource set index associated with the TCI state; or,
associate each TCI state indicated in the DCI with one SRS resource set index respectively.

In some implementations, the processor is further configured to:
configure at least two PUSCH transmission parameters for the terminal device, wherein values of the at least two PUSCH transmission parameters is the same or different.

In some implementations, the processor is further configured to:
configure CG indexes of other associated CGs in the CG configuration.

In a fifth aspect, a transmission apparatus for a physical uplink shared channel is provided and comprises:
a relationship determining module, configured to determine, in a case that a terminal device detects or obtains a sounding reference signal resource indicator (SRI) included in a configured grant (CG) configuration in downlink control information (DCI), an association between a specified parameter and a sounding reference signal (SRS) resource set based on indication information of a network device or a predefined rule;
a resource set determining module, configured to determine the SRS resource set based on the association;
a resource determining module, configured to determine an SRS resource based on the SRS resource set; and
a transmitting module, configured to transmit the physical uplink shared channel (PUSCH) based on the SRS resource.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate the capability value index of the terminal device; or
a third information indication field used to indicate a TCI state.

In some implementations, the indication information includes the CORESETPoolIndex configured in the high-level parameter of the SRS resource set, and the resource set determining module is specifically configured to:
detect the CORESET used to transmit the DCI or the PDCCH;
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

In some implementations, the indication information includes the SRS resource set index configured under the CORESET, and the resource set determining module is specifically configured to:
detect the CORESET used to transmit the DCI or the PDCCH; and
determine an SRS resource set corresponding to the SRS resource set index configured under the CORESET for transmitting the PUSCH.

In some implementations, the indication information includes the capability value index of the terminal device configured for the CORESET, and the resource set determining module is specifically configured to:
detect the CORESET used to transmit the DCI or the PDCCH;
obtain the capability value index of the terminal device configured for the CORESET; and
determine an SRS resource set corresponding to the capability value index of the terminal device configured for the CORESET for transmitting the PUSCH.

In some implementations, the indication information includes the specified information field in the DCI, and the resource set determining module is specifically configured to:
obtain the specified information field in the DCI; and
determine an SRS resource set indicated by the specified information field for transmitting the PUSCH.

In some implementations, the indication information includes the specified information field in the DCI, and before obtaining the specified information field in the DCI, the transmitting module is further configured to:
transmit capability information for supporting the specified information field in the DCI to the network device.

In some implementations, the indication information includes the TCI state configuration, and the resource set determining module is specifically configured to:
determine the TCI state configuration associated with the DCI; and
determine an SRS resource set associated with the TCI state configuration for transmitting the PUSCH.

In some implementations, the TCI state configuration associated with the DCI includes at least one of the following:
at least one TCI state activated by MAC-CE signaling;
at least one applied TCI state; or
a TCI state associated with a CORESET where the DCI is located or associated with CORESETPoolIndex configured for the CORESET.

In some implementations, the SRS resource set associated with the TCI state configuration includes at least one of the following:
an SRS resource set associated with a TCI state configured by RRC signaling; or
an SRS resource set included in TCI state signaling activated by an MAC CE.

In some implementations, the specified parameter includes the detected CORESET used to transmit the DCI or the PDCCH, and the resource set determining module is specifically configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the resource set determining module is specifically configured to:
detect the CORESET used to transmit the DCI or the PDCCH; and
select an SRS resource set associated with the CORESET or the CORESETPoolIndex of the CORESET from at least one SRS resource set for transmitting the PUSCH.

In some implementations, for the predefined rule, the association is determined based on the configured SRS resource set or based on the capability value index reported by the terminal device.

In some implementations, the specified parameter includes the CORESET used to transmit the DCI or the physical downlink control channel (PDCCH), and the association includes an association between the CORESET and the SRS resource set. The apparatus further comprises:
a first association determining module, configured to determine the association based on the configured SRS resource set, including
a first specified CORESET or all first specified CORESETs corresponds to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

In some implementations, in a case that the specified parameter includes the CORESET, the association includes a first relationship between the CORESET and the capability value index, and includes a second relationship between the capability value index and the SRS resource set. The apparatus further comprises:
a second association determining module, configured to determine the association based on the capability value reported by the terminal device, including:
establishing, in a case that the terminal device reports one capability value index, the first relationship between the one capability value index and a second specified CORESET or all CORESETs, and establishing the second relationship between the one capability value index and a specified SRS resource set; or,
establishing, in a case that the terminal device reports a plurality of capability value indexes, the first relationship between a part of the plurality of capability value indexes and a CORESET that is not configured with CORESETPoolIndex or a CORESET whose CORESETPoolIndex value is a first value, establishing the first relationship between a remaining other part of the plurality of the capability value indexes and a CORESET whose CORESETPoolIndex value is a second value, and establishing the second relationship between each capability value index and an SRS resource set specified by each capability value index.

In some implementations, when the SRS resource set associated with the CORESET or the CORESETPoolIndex of the CORESET is selected from at least one SRS resource set, the resource set determining module is specifically configured to:
obtain the capability value index associated with the detected CORESET based on the first relationship; and
determine the SRS resource set associated with the capability value index based on the second relationship.

In some implementations, the indication information includes the CORESETPoolIndex configured in the high-level parameter of the SRS resource set, and the resource set determining module is specifically configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

In some implementations, the indication information includes the SRS resource set index associated with the CG configuration or the SRI, and the resource set determining module is specifically configured to:
determine an SRS resource set corresponding to the SRS resource set index associated with the CG configuration or the SRI for transmitting the PUSCH.

In some implementations, the indication information includes the capability value index of the terminal device associated with the CG configuration or the SRI, and the resource set determining module is specifically configured to:
determine an SRS resource set corresponding to the capability value index of the terminal device associated with the CG configuration or the SRI for transmitting the PUSCH.

In some implementations, the indication information includes the TCI state configuration, and the resource set determining module is specifically configured to:
determine a TCI state configuration associated with the CG configuration or the SRI; and
determine an SRS resource set associated with the TCI state configuration for transmitting the PUSCH.

In some implementations, for the predefined rule, the association includes:
an association between the CG index configured in the CG configuration and the SRS resource set; or,
an association between the specified RRC parameter configured in the CG configuration and the SRS resource set.

In some implementations, the association between the CG index configured in the CG configuration and the SRS resource set includes:
an odd CG index corresponds to one SRS resource set of two SRS resource sets configured by the network device, and an even CG index corresponds to the other SRS resource set.

In some implementations, the CG configuration includes a second CG index of another associated CG.

In some implementations, the association between the specified RRC parameter configured in the CG configuration and the SRS resource set includes:
in a case that a first CG index corresponding to the CG configuration is smaller than the second CG index, the first CG index corresponds to a first SRS resource set of two SRS resource sets configured by the network device; and
in a case that the first CG index corresponding to the CG configuration is greater than the second CG index, the first CG index corresponds to a second SRS resource set of the two SRS resource sets configured by the network device.

In some implementations, the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

In some implementations, the CG configuration does not include information associated with other CGs, and the association includes:
the CG configuration corresponds to one SRS resource set of a plurality of SRS resource sets configured by the network device.

In a sixth aspect, the present disclosure further provides a transmission apparatus for a physical uplink shared channel, comprising:
a configuring module, configured to configure indication information for a terminal device; and
a transmitting module, configured to transmit the indication information to the terminal device;
wherein the indication information is used to determine an association between a specified parameter and a sounding reference signal (SRS) resource set.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate a capability value of the terminal device; or
a third information indication field used to indicate a TCI state.

In some implementations, for the specified information field in the DCI, the apparatus further includes:
a receiving module, configured to receive capability information about whether the specified information field in the DCI is supported transmitted by the terminal device.

The configuring module is specifically configured to configure, in a case that the capability information indicates that the terminal device supports the specified information field in the DCI, the indication information based on the specified information field in the DCI.

In some implementations, the indication information includes the TCI state configuration, and then the configuring module is specifically configured to:
configure, when radio resource control (RRC) signaling configures a TCI state, an associated SRS resource set index for each TCI state; or,
configure, when a media access control unit (MAC CE) activates a TCI state, an SRS resource set index associated with the TCI state; or,
associate each TCI state indicated in the DCI with one SRS resource set index respectively.

In some implementations, the configuring module is further configured to:
configure at least two PUSCH transmission parameters for the terminal device, wherein values of the at least two PUSCH transmission parameters is the same or different.

In some implementations, the configuring module is further configured to:
configure CG indexes of other associated CGs in the CG configuration.

In a seventh aspect, an embodiment of the present disclosure provides a computer readable storage medium, storing a computer program therein. When a processor executes the computer program, the method according to any one of the first aspect and second aspect is implemented.

In an eighth aspect, an embodiment of the present disclosure provides a computer program product, comprising a computer program code. When the computer program code is run, any method in the above first aspect and second aspect is enabled.

Technical effects achieved by the third aspect to the eighth aspect provided by embodiments of the present disclosure are the same as those of the transmission method for the physical uplink shared channel provided by the first aspect and the second aspect, which will not be repeated herein.

### BRIEF DESCRIPTION OF DRAWINGS

In order to explain technical solutions in embodiments of the present disclosure more clearly, the following will briefly introduce accompanying drawings that need to be used in the description of the embodiments. Apparently, the accompanying drawings in the following description are only some embodiments of the present disclosure, and for those of ordinary skill in the art, on the premise of no creative work, other accompanying drawings may further be obtained from these accompanying drawings.
FIG. 1 is a schematic flowchart of a transmission method for a physical uplink shared channel provided by an embodiment of the present disclosure.
FIG. 2 is another schematic flowchart of a transmission method for a physical uplink shared channel provided by an embodiment of the present disclosure.
FIG. 3 is another schematic flowchart of a transmission method for a physical uplink shared channel provided by an embodiment of the present disclosure.
FIG. 4 is a schematic structural diagram of a terminal device provided by an embodiment of the present disclosure.
FIG. 5 is a schematic structural diagram of a network device provided by an embodiment of the present disclosure.
FIG. 6 is a schematic structural diagram of a transmission apparatus for a physical uplink shared channel provided by an embodiment of the present disclosure.
FIG. 7 is another schematic structural diagram of a transmission apparatus for a physical uplink shared channel provided by an embodiment of the present disclosure.

### DETAILED DESCRIPTION

In embodiments of the present disclosure, a term "and/or" describes an association of associated objects, which means that there may be three kinds of relationships, for example, A and/or B may mean that there are three kinds of situations: A alone, A and B at the same time, and B alone. A character "/" universally indicates that front and back associated objects are in an "or" relationship.

A term "a plurality of" in the embodiments of the present disclosure means two or more, and other quantifiers are similar to it.

Technical solutions in the embodiments of the present disclosure will be clearly and completely described below in combination with the accompanying drawings in the embodiments of the present disclosure. Apparently, the described embodiments are only part of the embodiments of the present disclosure, not all of them. Based on the embodiments in the present disclosure, all other embodiments obtained by those of ordinary skill in the art without making creative work belong to the protection scope of the present disclosure.

A terminal device involved in the embodiments of the present disclosure may be a device that provides voice and/or data connectivity to a user, a handheld device with a wireless connection function, or other processing devices connected to a wireless modem, etc. In different systems, names of terminal devices may also be different. For example, in a 5G/B5G/6G system, the terminal devices may be called user equipment (UE). A wireless terminal device may communicate with one or more core networks (CNs) via a radio access network (RAN) and may be a mobile terminal device such as a mobile phone (or a "cellular" phone) and a computer with a mobile terminal device, for example, a portable, pocket-sized, handheld, computer-built-in, or vehicle-mounted mobile apparatus that exchanges language and/or data with the RAN, and for example, a personal communication service (PCS) phone, a cordless phone, a session initiated protocol (SIP) phone, a wireless local loop (WLL) station, a personal digital assistant (PDA), and other devices. The wireless terminal device may also be called a system, a subscriber unit, a subscriber station, a mobile station, a mobile, a remote station, an access point, a remote terminal, an access terminal, a user terminal, a user agent, and a user device, which is not limited in the embodiments of the present disclosure.

A network device involved in the embodiments of the present disclosure may be a base station which may include a plurality of cells that provide services to a terminal. According to different specific application scenarios, the base station may also be called an access point, or may be a device in an access network that communicates with a wireless terminal device through one or more sectors on an air interface, or other names. The network device may be configured to interchange a received air frame with an Internet protocol (IP) packet, acting as a router between the wireless terminal device and the rest of the access network, wherein the rest of the access network may include an Internet protocol (IP) communication network. The network device may also coordinate management of attributes of the air interface. For example, the network device involved in the embodiments of the present disclosure may be a network device (a base transceiver station (BTS)) in a global system for mobile communications (GSM) or code division multiple access (CDMA), may also be a network device (NodeB) in wide-band code division multiple access (WCDMA), may further be an evolutional network device (an evolutional Node B, eNB or e-NodeB) in a long term evolution (LTE) system, a 5G base station (gNB) in a 5G network architecture (a next generation system), and may also be a home evolved base station (a home evolved Node B, HeNB), a relay node, a home base station (a femto), a pico base station (a pico), etc., which is not limited in the embodiments of the present disclosure. In some network structures, the network device may include a centralized unit (CU) node and a distributed unit (DU) node, and a centralized unit and a distributed unit may also be geographically separated.

Multi input multi output (MIMO) transmission may be performed between the network device and the terminal device by using one or more antennas each, and the MIMO transmission may be single user MIMO (SU-MIMO) or multiple user MIMO (MU-MIMO). According to the shape and number of root antenna combinations, the MIMO transmission may be 2D-MIMO, 3D-MIMO, FD-MIMO, or massive-MIMO, or may be diversity transmission or precoded transmission or beam forming transmission, etc.

When the PUSCH is scheduled independently by using a multi-DCI framework, or the PUSCH is transmitted simultaneously through a plurality of CG configurations, or the PUSCH is scheduled through the DCI and the PUSCH is transmitted through the configured grant (CG) configuration simultaneously, if a plurality of SRS resource sets are configured, which SRS resource set the SRI indicated by the SRI in the DCI or the CG configuration acts on cannot be determined by the terminal device. As a result, correct transmission of the PUSCH cannot be effectively ensured, and a transmission performance is reduced.

For example, when the PUSCH is scheduled independently by using a multi-DCI framework, the SRS resource set determined by the terminal device may not be consistent with the SRS resource set understood by a network side. As a result, the correct transmission of the PUSCH cannot be effectively ensured, For another example, when the terminal device transmits the PUSCH through the plurality of CG configurations simultaneously, if it is determined that all the CG configurations are associated with a first SRS resource set, since each SRS resource set is usually associated with a panel (antenna panel), as a result, the PUSCH may be transmitted simultaneously by the terminal device only through one single panel, and thus the transmission performance of the PUSCH is reduced.

In view of this, an embodiment of the present disclosure proposes a transmission method for a PUSCH, a device, and a storage medium.

In the embodiment of the present disclosure, an SRS resource set used to transmit the PUSCH may be understood by a terminal device according to a predefined rule, i.e., which PUSCH the SRS resource set acts on is determined. In this way, when the PUSCH is scheduled independently through a multi-DCI framework, it can be ensured that the SRS resource set determined by the network device and the SRS resource set determined by the terminal device are consistent, and correct transmission of the PUSCH can be ensured. When the PUSCH is scheduled through the DCI and the PUSCH is transmitted through the CG configuration simultaneously, or the PUSCH is transmitted through a plurality of CG configurations, different SRS resource sets may be determined, thus it is ensured that a plurality of panels perform transmission simultaneously, and improving the transmission performance of the PUSCH.

In another case, the network device may indicate which SRS resource set is adopted to the terminal device. This indication mode may be explicit or implicit, thereby also ensuring correct transmission of the PUSCH, and improving the transmission performance of the PUSCH.

The transmission method for the PUSCH provided by the embodiment of the present disclosure is described below by way of specific implementations. For ease of understanding, modes of determining the SRS resource set based on the predefined rule and/or determining the SRS resource set based on an indication are described below respectively.

I. An SRS resource set is determined based on a predefined rule

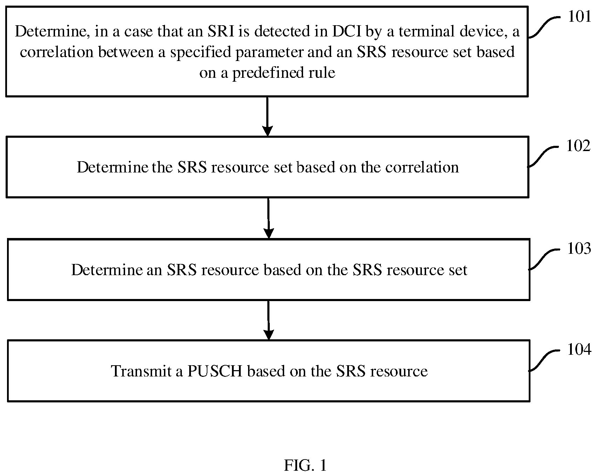

As shown in FIG. 1, which is a flowchart of a method for determining an SRS resource set by a terminal device based on a predefined rule, the method is applied to a scenario in which at least one piece of DCI schedules a PUSCH, and comprises the following steps.

Step 101, in a case that the terminal device detects an SRI in the DCI, determining an association between a specified parameter and the SRS resource set based on a predefined rule. In addition, in step 102, determining the SRS resource set based on the association.

The predefined rule is used to determine the association between the specified parameter and the SRS resource set. The specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, or a capability value index of the terminal device.

The capability value index of the terminal device above is a capability value related to a panel (antenna panel) of the terminal device, and the capability value is used to indicate a maximum number of SRS antenna ports. For example, in an Rel-17 uplink panel selection scenario, before transmission starts, a panel-related capability value set index: capability [set] index may be reported by the terminal device, and the capability value set index may also be referred to simply as a capability value index. Each capability value index includes a maximum number of supported SRS ports (which may also be referred to as a capability value), and any two capability value indexes correspond to different numbers of SRS ports.

How many panels of SRS ports the terminal has may be determined by a network side device according to the capability value index reported by the terminal. For example, the terminal device has three panels with 2, 2, and 4 SRS antenna ports respectively, and then 2 capability value indexes may be reported by the terminal device and correspond to 2 SRS ports and 4 SRS ports respectively. The network side may determine that the terminal device at least has 2-port and 4-port panels after receiving the capability value indexes reported by the terminal device. In Rel-17, the capability value index reported by the terminal may only be used for beam measurement reporting. When layer 1 reference signal received power (L1-RSRP) or layer 1 signal to interference and noise ratio (L1-SINR) is reported, the terminal device carries a capability value index that indicates which panel measures this measured value when each channel state information-reference signal resource indicator/synchronization signal bock resource indicator (CRI/SSBRI) and the corresponding L1-RSRP or L1-SINR are reported.

Example 1) to Example 5) are given below to illustrate how a terminal device determines an SRS resource set based on a predefined rule and an association between a specified parameter and the SRS resource set.

Example 1), when a specified parameter includes a CORESET, an SRS resource set is determined based on an association:

the CORESET in the specified parameter and the SRS resource set have a default association.

When the SRS resource set is determined based on the association, it may be implemented as follows: the CORESET used to transmit DCI or a PDCCH is detected; and then an SRS resource set associated with the CORESET is selected from at least one SRS resource set for transmitting the PUSCH.

That is, there is the default association between the CORESET and the SRS resource set. During implementation, the CORESET used to transmit the DCI or the PDCCH is first determined, and then the SRS resource set for the CORESET is determined based on the association.

Example 2), when a specified parameter includes a CORESET and CORESETPoolIndex, an SRS resource set is determined based on an association:
in this case, it may be implemented as follows: the CORESET used to transmit DCI or a PDCCH is detected; and then an SRS resource set associated with the CORESET or the CORESETPoolIndex of the CORESET is selected from at least one SRS resource set used to transmit a PUSCH.

For example, a CORESET1 used to transmit the DCI or the PDCCH may be determined first, then CORESETPoolIndex1 of the CORESET1 is determined, and then an SRS resource set associated with the CORESETPoolIndex1 is selected for subsequent transmission of the PUSCH.

Example 3), an SRS resource is determined based on an association of a CORESET or CORESETPoolIndex:

Regardless of whether the predefined rule is the case in Example 1) or the case in Example 2) above, the association between the specified parameter in the predefined rule and the SRS resource set may be determined based on the configured SRS resource set or based on the capability value index reported by the terminal device.

For example, in a case that the specified parameter includes the CORESET, and the association includes an association between the CORESET and the SRS resource set, determining the association based on the configured SRS resource set may be implemented as follows:
a, the association is determined based on the configured SRS resource set
a-1, when the network device configures a certain number of SRS resource sets, the association may be at least one association of a following association a-1-1 to association a-1-3.
association a-1-1: a first specified CORESET or all CORESETs are associated with an SRS resource set. The first specified CORESET may be a CORESET whose CORESETPoolIndex value is 0, or a CORESET that is not configured with CORESETPoolIndex, or a CORESET whose CORESETPoolIndex value is 1. When the CORESET is not configured with the CORESETPoolIndex, a default or equivalent CORESETPoolIndex value of the CORESET is 0.
association a-1-2: a second specified CORESET is associated with one SRS resource set of two SRS resource sets configured by the network device, and a third specified CORESET is associated with the other SRS resource set. For example, the second specified CORESET may be a CORESET not configured with CORESETPoolIndex or a CORESET whose CORESETPoolIndex value is 0. The third specified CORESET may be a CORESET whose CORESETPoolIndex value is 1. The second specified CORESET and the third specified CORESET may also be reversed.
association a-1-3: the second specified CORESET corresponds to a set of first resource sets of a plurality of SRS resource sets configured by the network device, and the third specified CORESET corresponds to a set of second resource sets of the plurality of resource sets.

For example, the second specified CORESET is associated with a first SRS resource set and a second SRS resource set, and the third specified CORESET is associated with a third SRS resource set and a fourth SRS resource set. Or, the second specified CORESET is associated with the first SRS resource set and the third SRS resource set, and the third specified CORESET is associated with the second SRS resource set and the fourth SRS resource set. Or, the second specified CORESET is associated with the first SRS resource set to an Nth SRS resource set, and the third specified CORESET is associated with an (N+1)th SRS resource set to a 2Nth or Mth SRS resource set. Or, the second specified CORESET is associated with the first SRS resource set, the third SRS resource set, ..., to a (2N-1)th or (2N+1)th SRS resource set, and the third specified CORESET is associated with the second SRS resource set, the fourth SRS resource set, ..., and the 2Nth SRS resource set.
a-2, when the number of SRS resource sets configured on the network side is variable, the association may further be determined according to the number of the configured SRS resource sets.
a-2-1, one SRS resource set is configured.

In a case that the network device configures one SRS resource set for the terminal device, the one SRS resource set is associated with the first specified CORESET, or the one SRS resource set is associated with all CORESETs.
a-2-2, two SRS resource sets are configured.

In a case that the network device configures two SRS resource sets for the terminal device, the CORESET not configured with the CORESETPoolIndex or the CORESET whose CORESETPoolIndex value is 0 corresponds to one SRS resource set of the two SRS resource sets, and the CORESET whose CORESETPoolIndex value is 1 corresponds to the other SRS resource set.

For example, the two SRS resource sets are an SRS resource set 1 and an SRS resource set 2, then the SRS resource set 1 is associated with the CORESET whose CORESETPoolIndex value is 0, and the SRS resource set 2 is associated with the CORESET whose CORESETPoolIndex value is 1.
a-2-3, a plurality of SRS resource sets are configured.

In a case that the network device configures four SRS resource sets for the terminal device, the CORESET not configured with the CORESETPoolIndex or the CORESET whose CORESETPoolIndex value is 0 corresponds to the first SRS resource set and the second SRS resource set, and the CORESET whose CORESETPoolIndex value is 1 corresponds to the third SRS resource set and the fourth SRS resource set.

In summary, when one SRS resource set is configured, the predefined rule specifies that the one SRS resource set is associated with all CORESETs, or with some CORESETs, or with the CORESET not configured with the CORESETPoolIndex, or with the CORESET whose CORESETPoolIndex value is 0, or with the CORESET whose CORESETPoolIndex value is 1.

When two SRS resource sets are configured, each SRS resource set is associated with one or more CORESET or CORESETPoolIndex by default.

When three and more SRS resource sets are configured, some of these SRS resource sets are associated with one or more CORESETs or CORESETPoolIndex by default, and so on.

Exemplarily, a following assumption is made about how to establish a predefined rule according to the number of SRS resource sets. If a parameter srs-ResourceSetToAddModList or srs-ResourceSetToAddModListDCI-0-2 is configured with two SRS resource sets for 'codebook' or 'noncodebook' usage, the first SRS resource set is associated with the CORESET whose CORESETPoolIndex value is 0, and the second SRS resource set is associated with the CORESET whose CORESETPoolIndex value is 1.

In another case, in the implementation, if the parameter srs-ResourceSetToAddModList or srs-ResourceSetToAddModListDCI-0-2 is configured with one SRS resource sets for 'codebook' or 'noncodebook' usage, the SRS resource set is associated with the CORESET whose CORESETPoolIndex value is 0.

In another case, in the implementation, if the parameter srs-ResourceSetToAddModList or srs-ResourceSetToAddModListDCI-0-2 is configured with three or four SRS resource sets for 'codebook' or 'noncodebook' usage, the first and/or the third SRS resource set is associated with the CORESET whose CORESETPoolIndex value is 0, and the second and/or the fourth SRS resource set is associated with the CORESET whose CORESETPoolIndex value is 1.

In the above association, the CORESET whose CORESETPoolIndex value is 0 and the CORESET whose CORESETPoolIndex value is 1 may also be interchanged.

In all embodiments of the present disclosure, the CORESET whose CORESETPoolIndex value is 0 contains both a CORESET that is configured with CORESETPoolindex with the parameter value of 0, and a CORESET that is not configured with the CORESETPoolindex parameter.

The nth (n=1,2,3,4,...) SRS resource sets above are all determined by sorting from low to high or high to low according to a parameter srs-ResourceSetId. For example, when a high-level parameter 'txconfig' is configured as 'codebook', the first SRS resource set is an SRS resource set with a lowest srs-ResourceSetId value in SRS resource sets whose usage is 'codebook'. When the high-level parameter 'txconfig' is configured as 'noncodebook', the first SRS resource set is an SRS resource set with a lowest srs-ResourceSetId value in SRS resource sets whose usage is 'noncodebook'.

When UE detects DCI with an SRI field at a certain CORESET, the SRS resource set associated with the CORESET may be determined according to the above predefined rule, and thus the corresponding SRS resource as well as a transmission port of the PUSCH are determined according to an indication of the SRI. For example, when the SRS resource set for transmitting the PUSCH is determined, the CORESET used to transmit the DCI may be detected first, and then if the predefined rule is the association between the CORESET and the SRS resource set, the SRS resource set for transmitting the PUSCH may be determined based on the association. In addition, if the predefined rule is the association between the CORESETPoolIndex and the SRS resource set, the CORESETPoolIndex configured for the CORESET is obtained based on the CORESET where the DCI is detected, and then the SRS resource set for transmitting the PUSCH may be determined based on the association. In addition, if the CORESET is not configured with the CORESETPoolIndex, the SRS resource set may be determined according to a default CORESETPoolIndex value (i.e., the value 0) of the CORESET.
b, an association between the parameter CORESETPoolIndex and the SRS resource set may also be established directly.

### For example:

b-1, when the network device configures a certain number of SRS resource sets, the association may be at least one association of a following association b-1-1 to association b-1-3.
association b-1-1: a first specified CORESETPoolIndex value, or all CORESETPoolIndex values are associated with one SRS resource set. The first specified CORESETPoolIndex value may be 0 or 1.
association b-1-2: a second specified CORESETPoolIndex value is associated with one SRS resource set, and a third specified CORESETPoolIndex value is associated with one SRS resource set. For example, the second specified CORESETPoolIndex value may be 0 or 1, and the third specified CORESETPoolIndex value may be 1 or 0.
association b-1-3: the second specified CORESETPoolIndex value is associated with a first SRS resource set and a second SRS resource set, and the third specified CORESETPoolIndex value is associated with a third SRS resource set and a fourth SRS resource set. Or, the second specified CORESETPoolIndex value is associated with the first SRS resource set and the third SRS resource set, and the third specified CORESETPoolIndex value is associated with the second SRS resource set and the fourth SRS resource set. Or, the second specified CORESETPoolIndex value is associated with the first SRS resource set to an Nth SRS resource set, and the third specified CORESETPoolIndex value is associated with an (N+1)th SRS resource set to a 2Nth or Mth SRS resource set. Or, the second specified CORESETPoolIndex value is associated with the first SRS resource set, the third SRS resource set, ..., to a (2N-1)th or (2N+1)th SRS resource set, and the third specified CORESETPoolIndex value is associated with the second SRS resource set, the fourth SRS resource set, ..., and the 2Nth SRS resource set.
b-2, when the number of SRS resource sets configured on the network side is variable, the association may further be determined according to the number of the configured SRS resource sets, and the following cases are included.
b-2-1, one SRS resource set is configured.

In a case that the network device configures one SRS resource set for the terminal device, the one SRS resource set is associated with the first specified CORESETPoolIndex value, or the one SRS resource set is associated with all CORESETPoolIndex values.
b-2-2, two SRS resource sets are configured.

In a case that the network device configures two SRS resource sets for the terminal device, the second specified CORESETPoolIndex value corresponds to one SRS resource set of the two SRS resource sets, and the third specified CORESETPoolIndex value corresponds to the other SRS resource set.
b-2-3, four SRS resource sets are configured.

In a case that the network device configures four SRS resource sets for the terminal device, the second specified CORESETPoolIndex value corresponds to the first SRS resource set and the second SRS resource set, and the third specified CORESETPoolIndex value corresponds to the third SRS resource set and the fourth SRS resource set.

In a case that the association between the parameter CORESETPoolIndex and the SRS resource set is established, the SRS resource set the DCI acts on may be determined by the terminal according to the CORESETPoolIndex value of the CORESET where the DCI is detected, and thus a corresponding SRS resource is determined to be used for transmission of the PUSCH.
c, an association is determined based on a capability value: the association includes a first relationship between the CORESET and a capability value index, and includes a second relationship between the capability value index and the SRS resource set.
c-1, a case that the terminal device reports one capability value index

In a case that the terminal device reports one capability value index, the one capability value index and a second specified CORESET or all CORESETs establish the first relationship, and the one capability value index and a specified SRS resource set establish the second relationship.

When one capability value index is reported, by default the capability value index has the first relationship with the CORESET whose CORESETPoolindex value is 0, or by default the one capability value index has the first relationship with all CORESETs, and then the one capability value index has the second relationship with the specified SRS resource set.

As a result, when the SRS resource set is determined, the CORESET where the DCI or PDCCH is detected is first determined, then the capability value corresponding to the CORESET is determined based on the first relationship, and then the SRS resource set corresponding to the capability value is determined based on the second relationship.
c-2, a case that the terminal device reports a plurality of capability value indexes

In a case that the terminal device reports the plurality of capability value indexes, the first relationship is established between a part of the plurality of capability values indexes and a CORESET that is not configured with CORESETPoolIndex or a CORESET whose CORESETPoolIndex value is a first value, the first relationship is established between a remaining other part of the plurality of capability value indexes and a CORESET whose CORESETPoolIndex value is a second value, and the second relationship is established between each capability value index and an SRS resource set specified by each capability value index.

For example, in a case that the terminal device reports a plurality of capability value indexes, there is a first relationship between a part of the plurality of capability value indexes and a CORESET that is not configured with CORESETPoolIndex or a CORESET whose CORESETPoolIndex value is 0, and there is the first relationship between a remaining other part of the plurality of the capability value indexes and a CORESET whose CORESETPoolIndex value is 1, and there is a second relationship between each capability value and an SRS resource set specified by each capability value. That is, the first value and the second value may be set as desired, the first value may be 0 or 1, and the second value may be 1 or 0, as long as the first value and the second value distinguish between different CORESETPoolIndex.

For another example, when two capability values are reported, by default a first capability value is associated with a CORESET whose CORESETPoolindex value is 0 or a CORESET that is not configured with a parameter CORESETPoolindex, and a second capability value is associated with a CORESET whose CORESETPoolindex value is 1. Or, by default the first capability value is associated with a CORESET whose CORESETPoolindex value is 1, and the second capability value is associated with a CORESET whose CORESETPoolindex value is 0 or a CORESET that is not configured with a parameter CORESETPoolindex.

When three or more capability values are reported, by default a (2n-1)th (n=1, 2, ...) capability value or a (2n+1)th (n=0, 1, 2, ...) capability value is associated with a CORESET whose CORESETPoolindex value is 0 or a CORESET that is not configured with a parameter CORESETPoolindex. A 2nth (n=0, 1, 2, ... or n=1, 2, ...) capability value is associated with a CORESET whose CORESETPoolindex value is 1. Or by default the 2nth (n=0, 1, 2, ... or n=1, 2, ...) capability value is associated with a CORESET whose CORESETPoolindex value is 0 or a CORESET that is not configured with a parameter CORESETPoolindex. The (2n-1)th (n=1, 2, ...) capability value or the (2n+1)th (n=0, 1, 2, ...) capability value is associated with a CORESET whose CORESETPoolindex value is 1.
d. An association between the parameter CORESETPoolIndex and the capability value may further be established, and thus an association between the parameter CORESETPoolIndex and the SRS resource set is established. For example:
d-1, a case that the terminal device reports one capability value index

In a case that the terminal device reports one capability value index, the one capability value index and a second specified CORESETPoolIndex value or all CORESETPoolIndex values establish the first relationship, and the one capability value index and a specified SRS resource set establish the second relationship. The second specified CORESETPoolIndex value may be 0 or 1.
d-2, a case that the terminal device reports a plurality of capability value indexes

In a case that the terminal device reports the plurality of capability value indexes, the first relationship is established between a part of the plurality of capability value indexes and a third specified CORESETPoolIndex value, and the first relationship is established between the remaining other part of the plurality of the capability value indexes and a fourth specified CORESETPoolIndex value. The third specified CORESETPoolIndex value may be 0 or 1, and the fourth specified CORESETPoolIndex value may be 1 or 0.

As a result, when the SRS resource set is determined, the CORESETPoolIndex value of the CORESET where the DCI or PDCCH is detected is first determined, then the corresponding capability value is determined based on the CORESETPoolIndex value, and then the corresponding SRS resource set is determined based on the association of the capability value and the SRS resource set.

The following is a further example of how to determine the SRS resource set based on the association determined by the capability value.

For example, when UE reports one capability value, the capability value is associated with a CORESET whose CORESETPoolindex value is 0.

When UE reports two capability values, a first capability value is associated with a CORESET whose CORESETPoolindex value is 0, and a second capability value is associated with a CORESET whose CORESETPoolindex value is 1.

When UE reports three or more capability values, a (2n-1)th (n=1, 2, ...) capability value or a (2n+1)th (n=0, 1, 2, ...) capability value is associated with a CORESET whose CORESETPoolindex value is 0, and a 2nth (n=0, 1, 2, ... or n=1, 2, ...) capability value is associated with a CORESET whose CORESETPoolindex value is 1.

In the above association, the CORESET whose CORESETPoolIndex value is 0 and the CORESET whose CORESETPoolIndex value is 1 may also be interchanged.

When the UE detects DCI with an SRI field at a certain CORESET, the capacity value associated with the CORESET may be determined according to the above predefined rule, thus a maximum SRS port corresponding to the capability value as well as the SRS resource set are determined, and the corresponding SRS resource as well as a transmission port of the PUSCH are determined according to an indication of the SRI.

It needs to be noted, of course, that the above associations are merely illustrative and are not intended to limit the embodiments of the present disclosure.

Example 4), an SRS resource is determined based on a TCI state configuration in a specified parameter and a predefined rule:
different TCI state configurations may be predefined to associate different SRS resource sets.

As a result, when the SRS resource set for transmitting the PUSCH is determined, the TCI state configuration associated with the DCI may first be determined, and then according to the predefined rule, which SRS resource set is adopted to determine the SRS resource may be determined.

For example, the TCI state configuration may be a state bit in a TCI field in the DCI. For example, a TCI field indicates N TCI states. The predefined rule may be that each TCI state bit corresponds to an SRS resource set. For example, the TCI field indicates four TCI states, wherein a first TCI state bit and a second TCI state bit are used for a downlink TCI state indication, and a third TCI state bit and a fourth TCI state bit are used for an uplink TCI state indication. According to the predefined rule, the terminal may determine that the third TCI state bit is associated with the first SRS resource set and the fourth TCI state bit is associated with the second SRS resource set. When an indication of the TCI state bit is a first particular value (e.g., '111') or a reserved value ('Reserved'), then it means that the TCI state bit is not used. When an indication of the TCI state bit is a second particular value (e.g., '000' to '110'), then it means that the TCI state bit indicates a specific TCI state. Thus the SRS resource set the DCI acts on may be determined by the terminal according to the indication of the TCI in the DCI and an association of the TCI state bit with the SRS resource set, and thus the corresponding SRS resource is determined for transmission of the PUSCH.

For another example, it is still determined by a predefined rule that one or more TCI state bits each correspond to one SRS resource set. When the TCI field indicates the TCI state, an SRS resource set field or another information field is used to indicate which information bit is activated, e.g., a first TCI state bit is activated, or a second TCI state bit is activated, or two TCI state bits are both activated. If the SRS resource set is used, e.g., when the SRS resource set indicates '0', it means that the first TCI state is activated. When the SRS resource set indicates '1', it means that the second TCI state is activated. When the SRS resource set indicates '2' or '3', it means that that two TCIs are both activated. Thus the SRS resource set the SRI field in the current DCI acts on may be determined by the terminal according to the indication of the DCI and the predefined rule, and thus the corresponding SRS resource is determined for transmission of the PUSCH.

Example 5), an SRS resource set is determined based on a capability value index in a specified parameter:
different capability value indexes may be predefined to associate different SRS resource sets.

In this way, when the SRS resource set for transmitting the PUSCH is determined, the capability value reported by the terminal device may be first determined, and then which SRS resource set is adopted to determine the SRS resource may be determined according to the predefined rule.

For example, a first capability value index is associated with an SRS resource set 0, and a second capability value index is associated with an SRS resource set 1. Of course, associations here are merely illustrative and are not intended to limit the embodiments of the present disclosure. The first capability value index and the second capability value index are sorted from smallest to largest or from largest to smallest respectively in accordance with values of SRS ports. For example, the number of SRS ports corresponding to the capability value indexes reported by the terminal are 2 and 4 respectively, then the first capability value index refers to the capability value index for the number of SRS ports of 2, and the second capability value index refers to the capability value index for the number of SRS ports of 4.

For another example, the terminal reports a capability value index (e.g. a corresponding CORESETPoolIndex value is 0 or 1) for scheduling of each transmission and receiving point (TRP) respectively, and thus an SRS resource set corresponding to the scheduling of the TRP may be determined by both the network device and the terminal.

Step 103, determining an SRS resource based on the SRS resource set.

During implementation, the SRS resource is determined based on the SRI field in the DCI.

Step 104, transmitting the PUSCH based on the SRS resource.

In summary, there may be various implementation modes based on predefined rules, and the adopted predefined rules may be determined according to actual needs during implementation. There are rules for the terminal device to follow when determining the SRS resource set by adopting the predefined rules, and thus it may be ensured that the SRS resource set determined by the terminal device can ensure accurate transmission of the PUSCH.

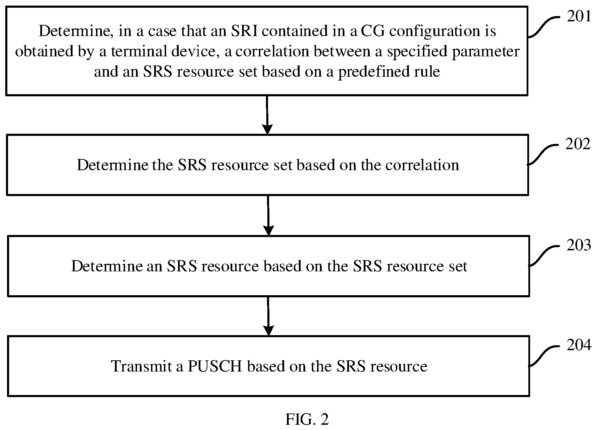

As shown in FIG. 2, which is a flowchart of a method for determining an SRS resource set by a terminal device based on a predefined rule, the method is applied to a scenario where a PUSCH is transmitted through at least one CG configuration and includes the following steps 201-204.

Step 201, in a case that the terminal device obtains an SRI included in the CG configuration, determining an association between a specified parameter and the SRS resource set based on the predefined rule. In addition, in step 202, determining the SRS resource set based on the association.

The predefined rule is used to determine the association between the specified parameter and the SRS resource set. The specified parameter includes at least one of the following: a high-level parameter CORESETPoolIndex, a transmission configuration indication (TCI) state configuration, a capability value index of the terminal device, an SRS resource set index, a CG index, or a specified radio resource control (RRC) parameter.

The above specified parameters may be configured by RRC parameters. For example, the RRC parameters may be configured under rrc-ConfiguredUplinkGrant or under srs-ResourceIndicator or srs-ResourceIndicator2-r17. The SRI included in the CG configuration may be configured by srs-ResourceIndicator or srs-ResourceIndicator2-r17, and indicates the SRS resource in the SRS resource set with which it is associated. The CG index may be a CG configuration ID, such as configuredGrantConfigIndex-r16 (32 at most).

In some implementations, when the specified parameter includes the high-level parameter CORESETPoolIndex, determining the SRS resource set based on the association may be implemented as follows.

The CORESETPoolIndex associated with the CG configuration or the SRI is obtained. selecting an SRS resource set whose CORESETPoolIndex configured in the high-level parameter of the SRS resource set is the same as the CORESETPoolIndex associated with the CG configuration or the SRI from at least one SRS resource set for transmitting the PUSCH.

A CORESETPoolINdex value associated with a CG configuration or an SRI may be configured under the CG configuration or the SRI, and the SRS resource set is also associated with a CORESETPoolINdex value, so the CG configuration or the SRI and the SRS resource set associated with the same CORESETPoolINdex value are associated. If a CG configuration includes an SRI (srs-ResourceIndicator or srs-ResourceIndicator2-r17), the SRS resource set corresponding to the CORESETPoolIndex value associated with the CG configuration is the SRS resource set associated with the SRI. If a CG includes a plurality of SRIs, each SRI may be associated with different CORESETPoolIndex values respectively, i.e., associated with different SRS resource sets.

In some implementations, when the specified parameter includes the SRS resource set index, determining the SRS resource set based on the association may be implemented as follows. An SRS resource set corresponding to the SRS resource set index associated with the CG configuration or the SRI is used for transmitting the PUSCH.

Under a CG configuration or an SRI, an SRS resource set index associated therewith may be configured and may correspond to a high-level parameter srs-ResourceSetId. If a CG configuration includes an SRI, the SRS resource set corresponding to the SRS resource set index associated with the CG configuration is the SRS resource set associated with the SRI. If a CG includes a plurality of SRIs, each SRI may be respectively associated with different SRS resource set indexes, i.e., associated with different SRS resource sets.

In some implementations, when the specified parameter includes the capability value index of the terminal device, determining the SRS resource set based on the association may be implemented as follows. An SRS resource set corresponding to the capability value index of the terminal device associated with the CG configuration or the SRI is determined for transmitting the PUSCH.

Under a CG configuration or an SRI, the capability value index of the terminal device associated therewith may be configured, and the SRS resource set is also associated with a capability value index, so that the CG configuration or the SRI and the SRS resource set associated with the same capability value index are associated. If a CG configuration includes an SRI, the SRS resource set corresponding to the capability value index associated with the CG configuration is the SRS resource set associated with the SRI. If a CG includes a plurality of SRIs, each SRI may be associated with different capability value indexes respectively, i.e., associated with different SRS resource sets.

In some implementations, when the specified parameter includes the TCI state configuration, determining the SRS resource set based on the association may be implemented as follows. A TCI state configuration associated with the CG configuration or the SRI is determined. An SRS resource set associated with the TCI state configuration is determined for transmitting the PUSCH.

An associated TCI state may be configured under a CG configuration or an SRI, and the SRS resource set is also associated with a TCI state (e.g. a first TCI state configured or indicated, or a second TCI state, etc.), so the CG configuration or the SRI and the SRS resource set associated with the same TCI state are associated. If a CG configuration includes an SRI, the SRS resource set corresponding to the TCI state associated with the CG configuration is the SRS resource set associated with the SRI. If a CG includes a plurality of SRIs, each SRI may be associated with different TCI states respectively, i.e., associated with different SRS resource sets.

In some implementations, when the specified parameter includes the CG index, the association may include: an association between the CG index configured in the CG configuration and the SRS resource set.

The CG index configured in the CG configuration may be understood as a specified RRC parameter.

In a possible implementation, the association between the CG index configured in the CG configuration and the SRS resource set includes that: an odd CG index corresponds to one SRS resource set of two SRS resource sets configured by the network device, and an even CG index corresponds to the other SRS resource set.

In the implementation, the CG index (configuredGrantConfigIndex-r16) has a predefined correspondence with the SRS resource set index, the odd CG index corresponds to a first SRS resource set, and the even CG index corresponds to a second SRS resource set. The corresponding SRS resource set may be determined according to the CG index configured in the CG configuration.

In some implementations, when the specified parameter includes a specified RRC parameter, the association may include: an association between the specified RRC parameter configured in the CG configuration and the SRS resource set.

In a possible implementation, the CG configuration includes a second CG index of another associated CG, and the association between the specified RRC parameter configured in the CG configuration and the SRS resource set includes the following two cases.

In a first case, if a first CG index corresponding to the CG configuration is smaller than the second CG index, then the first CG index corresponds to a first SRS resource set of two SRS resource sets configured by the network device.

In a second case, if the first CG index corresponding to the CG configuration is greater than the second CG index, then the first CG index corresponds to a second SRS resource set of the two SRS resource sets configured by the network device.

The second CG index of another associated CG in the CG configuration may be understood as the specified RRC parameter, or both the first CG index and the second CG index may be understood as specified RRC parameters associated with two SRS resource sets respectively.

In addition, when the CG configuration does not include information associated with other CGs, i.e., the CG corresponding to the CG configuration is not associated with other CGs, the association includes that: the CG configuration corresponds to one SRS resource set, e.g. a first SRS resource set, of a plurality of SRS resource sets configured by the network device.

In the implementation, an association between two CGs may be pre-established by the network device. For example, the network device configures that a combination of some of CGs may do simultaneous transmission (or repetitive transmission). Exemplarily, the CG configuration includes an ID of the CG, and an ID of a CG that jointly performs simultaneous transmission or repetitive transmission with the CG, such as the following configuration code: 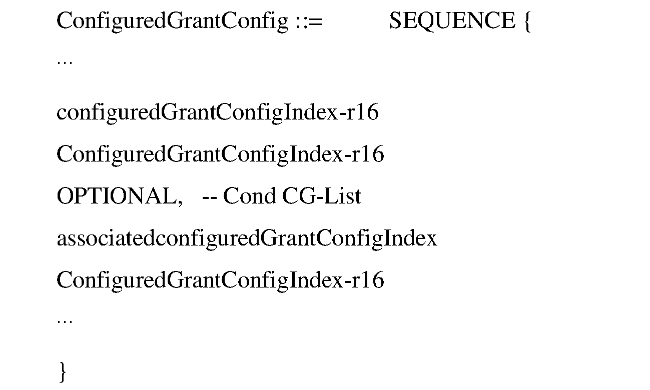 wherein associatedconfiguredGrantConfigIndex is used to configure the CG indexes of other associated CGs.

For example, in two CGs that have an association with other CGs, the CG with a lower CG index may be associated with the first SRS resource set, and the CG with a higher CG index may be associated with the second SRS resource set. A CG that is not associated with other CGs may be associated with only the first SRS resource set.

In another possible implementation, the association between the specified RRC parameter configured in the CG configuration and the SRS resource set includes that:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

For example, the first RRC parameter corresponds to a first SRI (srs-ResourceIndicator), the first SRI indication corresponds to the first SRS resource set, the second RRC parameter corresponds to a second SRI (srs-ResourceIndicator2-r17), and the second SRI corresponds to the second SRS resource set. The network device may configure only srs-ResourceIndicator or srs-ResourceIndicator2-r17, or both srs-ResourceIndicator and srs-ResourceIndicator2-r17 under the CG configuration.

Step 203, determining an SRS resource based on the SRS resource set.

During implementation, the SRS resource is determined based on the SRI in the CG configuration. The SRI (srs-ResourceIndicator or srs-ResourceIndicator2-r17) indicates the SRS resource in the SRS resource set associated therewith.

Step 204, transmitting the PUSCH based on the SRS resource.

In summary, there may be various implementation modes based on predefined rules, and the adopted predefined rules may be determined according to actual needs during implementation.

In the embodiment of the present disclosure, the method for determining the SRS resource set by the terminal device based on the predefined rule may further be applied to a scenario in which a PUSCH is scheduled through DCI and a PUSCH is transmitted through a CG configuration simultaneously. In this scenario, for scheduling of the PUSCH through the DCI, an SRS resource set may be determined by the method shown in FIG. 1 in the above embodiment. For transmission of the PUSCH through the CG configuration, an SRS resource set may be determined by the method shown in FIG. 2 in the above embodiment, which will not be repeated here.

The terminal device may select two CGs for simultaneous transmission or repetitive transmission, in which case the CGs associated with different SRS resource sets may be selected for transmission. The terminal device may further select one CG for simultaneous transmission or repetitive transmission with DCI scheduling, in which case the selected CG and DCI scheduling are associated with different SRS resource sets respectively. The terminal device may further select associated two or more CGs for simultaneous or repetitive transmission.

II. an SRS resource set is determined based on indication information of a network device

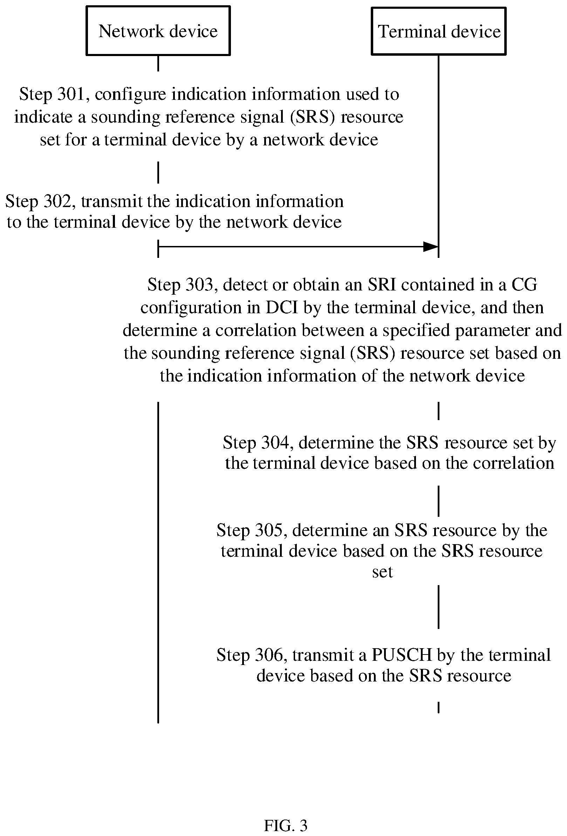

As shown in FIG. 3, which is a flowchart of a method for determining an SRS resource set by a terminal device based on indication information of a network device, the method is applied to a scenario in which at least one piece of DCI schedules a PUSCH or a scenario in which a PUSCH is transmitted through at least one CG configuration, may further be applied to a scenario in which DCI schedules a PUSCH and a PUSCH is transmitted through a CG configuration simultaneously, and comprises the following steps.

Step 301, the network device configures the indication information used to indicate the sounding reference signal (SRS) resource set for the terminal device.

Step 302, the network device transmits the indication information to the terminal device.

Step 303, a terminal device detects or obtains an SRI included in a CG configuration in DCI, then an association between a specified parameter and a sounding reference signal (SRS) resource set is determined based on the indication information of the network device.

Step 304, the terminal device determines the SRS resource set based on the association.

The indication information of the network device is used to determine an association between a specified parameter and the SRS resource set. The specified parameter includes at least one of the following: CORESETPoolIndex, a detected CORESET used to transmit the DCI or the PDCCH, a TCI state configuration, a specified information field in the DCI, a capability value index of the terminal device, an SRS resource set index, a CG index, or a specified radio resource control (RRC) parameter.

As a result, the SRS resource set is determined according to the specified parameter in the indication information on a network side, and the SRS resource set can be accurately understood based on the indication on the network side.

During implementation, the indication information of the network device includes at least one of 1) to 8) below.
1), CORESETPoolIndex configured in a high-level parameter of the SRS resource set. As a result, the SRS resource set indicated by the indication information may be obtained through the high-level parameter of the SRS resource set during implementation.

When the indication information is the CORESETPoolIndex configured in the high-level parameter of the SRS resource set, the association may be understood as an association between the CORESETPoolIndex and the SRS resource set.

In this case, when the terminal device detects the SRI in the DCI, determining the SRS resource set by the terminal device according to the association may be implemented as follows.

The CORESET used to transmit the DCI or the PDCCH is detected.

CORESETPoolIndex of the CORESET is obtained.

An SRS resource set whose CORESETPoolIndex configured in the high-level parameter of the SRS resource set is the same as the CORESETPoolIndex of the CORESET is selected from at least one SRS resource set for transmitting the PUSCH.

In another case, the terminal device obtains an SRI included in the CG configuration, and determining the SRS resource set may be implemented as follows.

The CORESETPoolIndex associated with the CG configuration or the SRI is obtained.

An SRS resource set whose CORESETPoolIndex configured in the high-level parameter of the SRS resource set is the same as the CORESETPoolIndex associated with the CG configuration or the SRI is selected from at least one SRS resource set for transmitting the PUSCH.

A CORESETPoolINdex value associated with a CG configuration or an SRI may be configured under the CG configuration or the SRI, and the SRS resource set is also associated with a CORESETPoolINdex value, so the CG configuration or the SRI and the SRS resource set associated with the same CORESETPoolINdex value are associated. If a CG configuration includes an SRI (srs-ResourceIndicator or srs-ResourceIndicator2-r17), the SRS resource set corresponding to the CORESETPoolIndex value associated with the CG configuration is the SRS resource set associated with the SRI. If a CG includes a plurality of SRIs, each SRI may be associated with different CORESETPoolIndex values respectively, i.e., associated with different SRS resource sets.

The following example shows how to configure the CORESETPoolIndex parameter in the high-level parameter related to the SRS resource set.

In the example, the high-level parameter corresponding to the SRS resource set is SRS-ResourceSet, configured in a parameter srs-ResourceSetToAddModList or srs-ResourceSetToAddModListDCI-0-2, and the usage of the SRS resource set is configured as 'codebook' or 'nonCodebook'. The parameter srs-ResourceSetToAddModList or srs-ResourceSetToAddModListDCI-0-2 corresponds to a DCI format 0_1 or 0_2 respectively, and two or more SRS resource sets with usage of 'codebook' or 'nonCodebook' may be configured. The SRI is an 'SRS resource indicator' field or a 'Second SRS resource indicator' field and may be carried by the DCI format 0_1 or 0_2, and a DCI format 0_0 has no SRI.

As an optional implementation, the associated CORESETPoolIndex parameter is configured under the high-level parameter SRS-ResourceSet corresponding to the SRS resource set.

For example, the associated CORESETPoolIndex parameter is configured only under the high-level parameter SRS-ResourceSet corresponding to the SRS resource set with usage of 'codebook' or 'nonCodebook'. That is, a condition for configuring the CORESETPoolIndex parameter under the SRS-ResourceSet is that the usage of the SRS-ResourceSet is 'codebook' or 'nonCodebook'. For the SRS resource set with the usage of 'codebook' or 'nonCodebook', if the parameter CORESETPoolIndex is not configured, it may also be considered that a value of the CORESETPoolIndex is 0. When a parameter txConfig related to a PUSCH transmission mode is configured as 'codebook' or 'nonCodebook' and the DCI is detected in a CORESET whose CORESETPoolIndex value is k (k=0 or 1), the terminal may determine the SRS resource set, associated with the SRI, whose CORESETPoolIndex value is k and whose usage is also 'codebook' or 'nonCodebook' at the same time.

The above method is applicable for all cases that one or more SRS resource sets with usage 'codebook' or 'nonCodebook' are configured in the high-level parameter srs-ResourceSetToAddModList or srs-ResourceSetToAddModListDCI-0-2. The terminal expects that there is no more than one SRS resource set whose usage is 'codebook' or 'nonCodebook' and whose CORESETPoolIndex value is k within a BWP or a cell, or that there is no more than one SRS resource set whose usage is 'codebook' or 'nonCodebook' and whose CORESETPoolIndex value is k configured in the high-level parameter srs-ResourceSetToAddModList or srs-ResourceSetToAddModListDCI-0-2. If there is more than one SRS resource set whose usage is 'codebook' or 'nonCodebook' and whose CORESETPoolIndex value is k configured in the high-level parameter srs-ResourceSetToAddModList or srs-ResourceSetToAddModListDCI-0-2, the SRS resource set associated with the SRI in the DCI may be determined by adopting this method in conjunction with other methods described later.

In addition, the parameter CORESETPoolIndex may also be configured in an SRS resource set whose usage is 'beamManagement' or 'antennaSwitching' to indicate an association of this SRS resource set with a CORESET (TRP) for uplink beam management or uplink antenna switching, which facilitates subsequent multi-panel transmission.

In the embodiment, unless otherwise specified, the SRS resource set refers to an SRS resource set whose usage is 'codebook' or 'nonCodebook'.

2), if the indication information is a capability value index of the terminal device configured for the CORESET, the SRS resource set may be determined by the terminal device according to the capability value index by configuring the capability value index of the terminal device under the CORESET.

When the terminal device detects the SRI in the DCI, determining the SRS resource set may be implemented as follows.

The CORESET used to transmit the DCI or the PDCCH is detected.

The capability value index of the terminal device configured for the CORESET is obtained.

An SRS resource set corresponding to the capability value index of the terminal device configured for the CORESET is determined for transmitting the PUSCH.

For example, a parameter Capability[Set]Index is configured under each CORESET, and UE determines a corresponding SRS resource set according to the number of SRS ports corresponding to the Capability[Set]Index (corresponding to the third case in mode II).

A panel-related capability value (e.g., the parameter Capability[Set]Index) is configured below each CORESET to indicate that a certain panel of the UE may be scheduled for transmission by the CORESET. Assuming that the numbers of SRS ports included in the SRS resource sets whose usage is 'codebook' or 'nonCodebook' configured in srs-ResourceSetToAddModList or srs-ResourceSetToAddModListDCI-0-2 are different, e.g. the number of SRS ports included in an SRS resource set 5 (srs-ResourceSetId=5) is 2, the number of SRS ports included in an SRS resource set 2 (srs-ResourceSetId=2) is 4, a maximum number of SRS ports corresponding to a capability value 1 is 4, and a maximum number of SRS ports corresponding to a capability value 2 is 4, when the UE detects DCI with an SRI in a certain CORESET, a capability value (e.g., the capability value 2) associated with the SRI is determined according to the association, thus the number of associated SRS ports (four ports) is determined, and thus the SRS resource set (i.e., the SRS resource set 2) associated with the SRI is indirectly determined.

CORESETs whose CORESETPoolIndex values are the same value may correspond to the same capability value, or the UE expects that the capability values associated with CORESETs with the same CORESETPoolIndex parameters are the same value. In this way, a fixed association between a TRP and a panels may be established, which means that one TRP schedules only the panel with one capability value. CORESETs whose CORESETPoolIndex values are different may correspond to different capability values, which ensures that panels scheduled by a plurality of TRPs are different and do not cause conflicts, i.e., there are not a plurality of TRPs that schedule the same panel at the same moment, which avoids a case that scheduling of the network side exceeds a capability of the terminal.

3), the indication information includes the specified information field in the DCI.

In some possible implementations, the specified information field in the DCI may include at least one of the following:
a first information indication field used to indicate the SRS resource set;
a second information indication field used to indicate the capability value index of the terminal device; or
a third information indication field used to indicate a TCI state.

For example, the first information indication field may identify an identifier of the SRS resource set, and thus the SRS resource set may be determined based on the first information indication field.

For another example, the capability value index of the terminal device is determined based on the second information indication field, and then based on a pre-established association between the capability value index and the SRS resource set, the SRS resource set to be adopted may be determined.

For another example, the TCI state indicated by the network device may be determined by the third information indication field, then the SRS resource set associated with different TCI states is pre-established, and thus the SRS resource set to be adopted may be determined based on the TCI state in the DCI.

For another example, for a case that different indication fields are used in combination, a possible embodiment is that the TCI field in the DCI indicates two TCI states, then an SRS resource set field or other information field is used to specify the use of one of TCI state bits (i.e., single TRP transmission), and then only one of the two TCI states indicated by the TCI state field will be activated. The SRS resource set associated with the TCI state determined to be activated based on a preset rule is used to transmit the PUSCH.

Based on the specified information field in the DCI above, determining the SRS resource set by the terminal device may be implemented as follows.

The specified information field in the DCI is obtained. Then, an SRS resource set indicated by the specified information field is used for transmitting the PUSCH.

In addition, since two TRPs perform scheduling independently, each of which performs an indication of the SRS resource set or an indication of the capability value independently, and this may result in that two pieces of DCI indicate the same SRS resource set and then indicate the same SRS resource, so that PUSCHs scheduled by two TRPs may be both transmitted by using a port the same as the SRS port, which is possible to exceed a capability of the UE. For example, both the two TRPs indicate that the terminal transmits a PUSCH with four data streams by using a four-port panel or using four ports, whereas the UE has only a four-port panel and cannot perform the transmission of a total of 8 data streams. However, for some UE, the number of panels is higher and the number of TxRUs is also higher, and the UE has the capability of transmission according to scheduling on the network side even if two pieces of TRP-scheduled UE use the same SRS resource set or SRS resource as a transmission port for the PUSCH. Therefore, the UE may pre-transmit capability information about whether the specified information field in the DCI is supported to the network device. If the UE does not have the relevant capability, the network device cannot use this method for the UE.

After the terminal determines the SRS resource set associated with the DCI, the corresponding SRS resource is determined for transmission of the PUSCH according to the indication of the SRI. For codebook-based transmission of the PUSCH, a TPMI field may also be included in the DCI to indicate the terminal to transmit a precoded codeword and a corresponding number of transmission layers. If the capability of the terminal is low, the number of ports for the PUSCH scheduled by two pieces of DCI may be greater than a maximum number of ports with which the terminal may perform transmission, or the number of data layers scheduled by two pieces of DCI exceeds a maximum number of data layers that can be transmitted by the terminal. To avoid this case, as a feasible implementation, in the present disclosure, scheduling of the DCI may also be limited, e.g., a maximum number of ports for the PUSCH scheduled by each piece of DCI may be limited, or a maximum number of data layers scheduled by each piece of DCI may be limited. For example, the terminal supports up to four data layers of transmission, the number of data layers scheduled by each piece of DCI may be limited to no more than 2, or the number of data layers of the PUSCH scheduled by the DCI transmitted in a COERSET whose CORESETPoolIndex value is 0 or without CORESETPoolIndex configured may be limited to no more than 3, and the number of data layers of the PUSCH scheduled by the DCI transmitted in a COERSET whose CORESETPoolIndex value is 1 may be limited to no more than 1, etc.

Or again, when the sum of data layers scheduled by two pieces of DCI is greater than a maximum number of layers supported by the terminal (e.g., Nmax), the PUSCH scheduled by the specified DCI is reduced to Nmax-N1 layers, wherein N1 is data layers scheduled by the other piece of DCI. For example, the number of data layers of the PUSCH scheduled by the DCI transmitted in a COERSET whose CORESETPoolIndex value is 0 or without CORESETPoolIndex configured is transmitted in accordance with the TPMI indicated by the DCI. The number of data layers of the PUSCH scheduled by the DCI transmitted in a COERSET whose CORESETPoolIndex value is 1 is reduced to Nmax-N1 layers. After data is reduced, the network device may be notified of an event of a data stream reduction via UCI feedback or other uplink signaling, etc., e.g., notified of the number of data streams after the deletion. A precoded codeword corresponding to a current data stream may further be indicated additionally and may also be a codeword pre-specified in a protocol. For example, a default precoded codeword is defined for transmission of the PUSCH of ranks 1, 2, 3, and 4 respectively to be used when the data stream is deleted.

The following is a description of how the three aforementioned specified information fields respectively determine the SRS resource set.

(1), based on the first specified information field:
for example, indicating the corresponding SRS resource set by the first specified information field, i.e., an SRS resource set field, may be implemented as follows.

When two SRS resource sets (usage is 'codebook' or 'noncodebook') are configured, a bit width of the SRS resource set field is 1 bit and is used only to indicate the first SRS resource set or the second SRS resource set. During implementation, a relationship between an index of the bit field and the indicated SRS resource set may be shown in Table 2.

**Table 2**

| A bit field is mapped to an index | Indication of an SRS resource set |
|---|---|
| 0 | An SRI and a TPMI field are associated with a first SRS resource set |
| 1 | An SRI and a TPMI field are associated with a second SRS resource set |

When three SRS resource sets are configured, a bit width of an SRS resource set field is 2 bits, and Table 3 is adopted for an indication of the SRS resource set. A relationship is shown in Table 3:

**Table 3**

| A bit field is mapped to an index | Indication of an SRS resource set |
|---|---|
| 0 | An SRI and a TPMI field are associated with a first SRS resource set |
| 1 | An SRI and a TPMI field are associated with a second SRS resource set |
| 2 | An SRI and a TPMI field are associated with a third SRS resource set |
| 3 | Reserved |

Similarly, when four SRS resource sets are configured, a bit width of an SRS resource set field is 2 bits, and Table 4 is adopted for an indication of the SRS resource set.

**Table 4**

| A bit field is mapped to an index | Indication of an SRS resource set |
|---|---|
| 0 | An SRI and a TPMI field are associated with a first SRS resource set |
| 1 | An SRI and a TPMI field are associated with a second SRS resource set |
| 2 | An SRI and a TPMI field are associated with a third SRS resource set |
| 3 | An SRI and a TPMI field are associated with a fourth SRS resource set |

Based on the cases described in the above tables, the UE, after receiving the SRI, determines the SRS resource set associated with the SRI according to the SRS resource set indication field, and determines the corresponding SRS resource according to the indication of the SRI, and uses the antenna port which is the same as the SRS resource to transmit the PUSCH.

(2) based on the second specified information field:
For example, the second specified information field is used to indicate a capability value, and the UE determines a corresponding SRS resource set according to a maximum number of SRS ports associated with the capability value.

When the UE reports one capability value, a bit width of a capability value indication field (i.e., the second information indication field) is 0 bit. The UE expects that the number of SRS resource sets whose usage is 'codebook' or 'noncodebook' configured on the network side is 1, and that the SRI in the DCI is associated with this SRS resource set, i.e., the SRS resource in the SRS resource set is indicated.

When the UE reports two capability values, the bit width of the capability value indication field is 1 bit, and code points '0' and '1' correspond to the first capability value and the second capability value respectively.

When the UE reports three capability values, the bit width of the capability value indication field is 2 bits, code points '00, 01' and '10' correspond to the first, second and third capability values respectively, and a code point '11' is a reserved state.

When the UE reports four capability values, the bit width of the capability value indication field is 2 bits, and code points '00, 01', '10' and '11' correspond to the first, second, third and fourth capability values respectively.

The UE may determine the corresponding maximum number of SRS ports according to the capability value indicated in the DCI, and thus the corresponding SRS resource set is determined according to the maximum number of SRS ports. In this way, the panels scheduled by each TRP may be changed dynamically.

The second information indication field may be a new information field, or may utilize an existing DCI information field, such as a TCI indication field, an SRS resource set indication field, etc.

Since two TRPs perform scheduling independently, each of which performs an indication of the SRS resource set or an indication of the capability value independently, and this may result in that two pieces of DCI indicate the same SRS resource set and then indicate the same SRS resource, so that PUSCHs scheduled by two TRPs may be both transmitted by using a port the same as the SRS port, which is possible to exceed a capability of the UE. For example, both the two TRPs indicate that the terminal transmits a PUSCH with four data streams by using a four-port panel or using four ports, whereas the UE has only a four-port panel and cannot perform the transmission of a total of 8 data streams. However, for some UE, the number of panels is higher and the number of TxRUs is also higher, and the UE has the capability of transmission according to scheduling on the network side even if two pieces of TRP-scheduled UE use the same SRS resource set or SRS resource as a transmission port for the PUSCH. Therefore, the UE may pre-report a capability to support information related to a dynamic indication of the SRS resource set or not. If the UE does not have the relevant capability, the network side cannot use this method for the UE.

As a feasible implementation, certain limitations may further be made on scheduling, such as a case of different transmission solutions of a PUSCH scheduled by two pieces of DCI, e.g., one is codebook based transmission of the PUSCH, the other is non-codebook based transmission of the PUSCH, and the SRS resource set is not in conflict under the two kinds of usage. In this case of the different transmission solutions of the PUSCH scheduled by two pieces of DCI, two txConfig parameters, e.g., txConfig and txConfig-r18, are configured for the UE by the network side and correspond to cases that CORESETPoolIndex values are 0 and 1 respectively.

(3) Based on the third information indication field:
for example, a TCI field in the DCI indicates a TCI state, and the UE determines a corresponding SRS resource set according to the TCI state. Similar to the method based on the second information indication field, the TCI field in the DCI may be detected, then the TCI state indicated by the TCI field is obtained, and then an adopted SRS resource set is determined according to a predefined association between the TCI state and the SRS resource set.

4), the indication information is the transmission configuration indication (TCI) state configuration, and thus the SRS resource set may be implicitly indicated by the TCI state configuration.

As a feasible implementation, when the terminal device detects the SRI in the DCI, determining the SRS resource set may be implemented as follows.

The TCI state configuration associated with the DCI is determined.

An SRS resource set associated with the TCI state configuration is determined for transmitting the PUSCH.

In the embodiment of the present disclosure, the TCI state configuration associated with the DCI includes at least one of the following:
at least one TCI state activated by MAC-CE signaling; wherein
for example, a plurality of groups of TCI state combinations are activated by using the MAC-CE signaling, and DCI signaling is later used to indicate one group of the TCI state combinations; each group of TCI state combinations may contain an uplink TCI state and/or a downlink TCI state, one or more uplink TCI states and downlink TCI states may be provided, and the plurality of uplink TCI states and downlink TCI states correspond to a plurality of channels or a plurality of pieces of information respectively (e.g., corresponding to a plurality of TRPs or transmission with a plurality of panels); when the MAC-CE signaling activates the TCI state, the SRS resource set index may be carried to indicate that the TCI state may act on the corresponding transmission of the SRS resource set; a corresponding TCI state may be activated respectively on the network side for each configured SRS resource set, e.g., all TCI state combinations in the MAC-CE signaling are associated with one SRS resource set; the SRS resource set index carried in the MAC-CE signaling may be an absolute index of the SRS resource set or a relative index; in addition, a CORESETPoolIndex value may further be carried in the MAC-CE signaling, and thus an association between the DCI and the MAC-CE signaling for activating the TCI state is established; specifically, after the terminal detects the DCI, the corresponding MAC-CE signaling is determined according to the CORESET where the DCI is located or the parameter CORESETPoolIndex of the CORESET, and thus the associated SRS resource set is determined; and for another example, each TCI state combination in the MAC-CE signaling is associated with an SRS resource set, in which case the corresponding associated SRS resource set may be determined by the terminal according to the TCI state combination (i.e., a code point of the TCI state, e.g., '011') indicated in DCI signaling;
at least one TCI state activated currently (may be understood as activated); or
a TCI state associated with a CORESET where the DCI is located or associated with CORESETPoolIndex configured for the CORESET.

As a feasible implementation, when the terminal device obtains an SRI included in the CG configuration, determining the SRS resource set may be implemented as follows.

A TCI state configuration associated with the CG configuration or the SRI is determined.

An SRS resource set associated with the TCI state configuration is determined for transmitting the PUSCH.

An associated TCI state (e.g. a first TCI state configured or indicated, or a second TCI state, etc.) may be configured under a CG configuration or an SRI, and the SRS resource set is also associated with a TCI state, so the CG configuration or the SRI and the SRS resource set associated with the same TCI state are associated. If a CG configuration includes an SRI, the SRS resource set corresponding to the TCI state associated with the CG configuration is the SRS resource set associated with the SRI. If a CG includes a plurality of SRIs, each SRI may be associated with different TCI states respectively, i.e., associated with different SRS resource sets.

In some implementations, the SRS resource set associated with the TCI state configuration includes at least one of the following:
an index of an SRS resource set associated with a TCI state configured by RRC signaling; or
an index of an SRS resource set included in TCI state signaling activated by an MAC CE.

For example, associations of different TCI state configurations with the SRS resource set is configured on the network side, and then the UE determines the (associated) SRS resource set the SRI acts on through the TCI state configurations.

In a possible implementation, when the RRC configures TCI states, each TCI state is associated with an index of an SRS resource set.

In another possible implementation, when the MAC CE activates the TCI state, the SRS resource set index is included (similar to the Rel-16 TCI activation/update MAC CE carrying the CORESETPoolIndex parameter similarly).

In a possible implementation, assuming that (unified) TCI state indications are used, each TCI state bit corresponds to an SRS resource set (predefined rule), when one TCI state bit in a piece of DCI schedules an SRS resource set, the indication of the other TCI state bit is a particular value, such as '111', which is equivalent to a reserved bit, and the terminal determines the SRS resource set the SRI acts on according to the TCI state indication.

In a possible implementation, each TCI state indication bit corresponds to an SRS resource set. When the indication of the TCI state bit is a first particular value (e.g., '111') or a reserved value ('Reserved'), then it means that the TCI state bit is not used. When the indication of the TCI state bit is a second particular value (e.g., '000' to '110'), then it means that the TCI state bit indicates a specific TCI state. Thus the SRS resource set the DCI acts on may be determined by the terminal according to the indication of the TCI in the DCI and an association of the TCI state bit with the SRS resource set, and thus the corresponding SRS resource is determined for transmission of the PUSCH.

In the embodiment of the present disclosure, in addition to the indication performed by the network device using the specified information field in the DCI based on the method above, the SRS resource set index may be indicated by the network device to the terminal device, and then the SRS resource set may be determined by the terminal device according to the DCI and the resource set index.

In a possible implementation, the SRS resource set index indicated by the network device includes the SRS resource set index configured for the CORESET. At this point, the CORESET used to transmit the DCI or the PDCCH may be detected by the terminal device. An SRS resource set corresponding to the SRS resource set index of the CORESET is used for transmitting the PUSCH.

For example, the associated SRS resource set index is configured under each CORESET, and each CORESET may be associated with an SRS resource set whose usage is codebook and/or non-codebook. The associated SRS resource set index may be configured in a high-level parameter ControlResourceSet corresponding to the CORESET. The SRS resource set index may be a high-level parameter srs-ResourceSetId, i.e., an absolute index of the SRS resource set (e.g., 0-15, sorted in a BWP), and may also be a relative index of the SRS resource set. For example the relative index is the first SRS resource set or the second SRS resource set, and these two indexes respectively correspond to the SRS resource set with a lower index or a higher index in the SRS resource set configured in srs-ResourceSetToAddModList or srs-ResourceSetToAddModListDCI-0-2 whose usage is 'codebook' or 'nonCodebook'.

After detecting a DCI with an SRI, the terminal device may determine the SRS resource set associated with the SRI according to the CORESET where the DCI is located, and thus the corresponding SRS resource is determined. The SRS resource set indexes associated with CORESETs with the same CORESETPoolIndex parameter may be the same or different, and if they are the same, it means that one TRP is associated with one SRS resource set, i.e., this TRP only schedules this SRS resource set for transmission. If they are different, it means that a plurality of SRS resource sets may be scheduled for transmission by one TRP.

5), the indication information includes the SRS resource set index associated with the CG configuration or the SRI, and when the terminal device obtains the SRI included in the CG configuration, determining the SRS resource set may be implemented as follows.

An SRS resource set corresponding to the SRS resource set index associated with the CG configuration or the SRI is used for transmitting the PUSCH.

Under a CG configuration or an SRI, an SRS resource set index associated therewith may be configured and may correspond to a high-level parameter srs-ResourceSetId. If a CG configuration includes an SRI, the SRS resource set corresponding to the SRS resource set index associated with the CG configuration is the SRS resource set associated with the SRI. If a CG includes a plurality of SRIs, each SRI may be respectively associated with different SRS resource set indexes, i.e., associated with different SRS resource sets.

6), the indication information includes the capability value index of the terminal device associated with the CG configuration or the SRI, and when the terminal device obtains the SRI included in the CG configuration, determining the SRS resource set may be implemented as follows.

An SRS resource set corresponding to the capability value index of the terminal device associated with the CG configuration or the SRI is determined for transmitting the PUSCH.

Under a CG configuration or an SRI, the capability value index of the terminal device associated therewith may be configured, and the SRS resource set is also associated with a capability value index, so that the CG configuration or the SRI and the SRS resource set associated with the same capability value index are associated. If a CG configuration includes an SRI, the SRS resource set corresponding to the capability value index associated with the CG configuration is the SRS resource set associated with the SRI. If a CG includes a plurality of SRIs, each SRI may be associated with different capability value indexes respectively, i.e., associated with different SRS resource sets.

7), the indication information includes the CG index associated in the CG configuration; and the association may include: an association between the CG index configured in the CG configuration and the SRS resource set.

The CG index configured in the CG configuration may be understood as a specified RRC parameter.

When the terminal device obtains the SRI included in the CG configuration, an association between the CG index configured in the CG configuration and the SRS resource set may be determined based on the following mode, and then the SRS resource set is determined based on the association:
an odd CG index corresponds to one SRS resource set of two SRS resource sets configured by the network device, and an even CG index corresponds to the other SRS resource set.

8), when the indication information includes a specified RRC parameter associated in the CG configuration, the association may include: an association between the specified RRC parameter configured in the CG configuration and the SRS resource set.

When the terminal device obtains the SRI included in the CG configuration, the association between the specified RRC parameter configured in the CG configuration and the SRS resource set may be determined based on the following two cases, and then the SRS resource set is determined based on the association.

In a first case, if a first CG index corresponding to the CG configuration is smaller than the second CG index, then the first CG index corresponds to a first SRS resource set of two SRS resource sets configured by the network device.

In a second case, if the first CG index corresponding to the CG configuration is greater than the second CG index, then the first CG index corresponds to a second SRS resource set of the two SRS resource sets configured by the network device.

The second CG index of another associated CG in the CG configuration may be understood as the specified RRC parameter, or both the first CG index and the second CG index may be understood as specified RRC parameters associated with two SRS resource sets respectively.

For example, in two CGs that have an association with other CGs, the CG with a lower CG index may be associated with the first SRS resource set, and the CG with a higher CG index may be associated with the second SRS resource set. A CG that is not associated with other CGs may be associated with only the first SRS resource set.

Step 305, the terminal device determines an SRS resource based on the SRS resource set.

Step 306, the terminal device transmits the PUSCH based on the SRS resource.

In the embodiment of the present disclosure, two PUSCH transmission parameters (e.g., txconfig and txconfig_r18) may be configured for the terminal device by the network device, and the two PUSCH transmission parameters take the same or different values. As a result, the terminal device may be scheduled by two pieces of DCI or PDCCHs (i.e., TRPs) independently to perform transmission by adopting different transmission methods. For example, the terminal device is scheduled to perform transmission by adopting a codebook-based PUSCH transmission mode and a non-codebook-based PUSCH transmission mode respectively, thus the flexibility of scheduling of the network device is increased, and a system performance is improved. In this case, due to different transmission methods of the PUSCH scheduled by each piece of DCI, which correspond to different SRS resource sets, the SRS resource sets associated with two pieces of DCI are different when the SRS resource set is indicated dynamically using an 'SRS resource set' indication field or other information fields in the DCI signaling, i.e., the SRS resource sets whose usage is codebook and non-codebook respectively. In this case, the SRS resource sets indicated by the two pieces of DCI signaling are not in conflict, i.e., there is no situation where the PUSCH transmission corresponding to the two-DCI-indicated SRI resources exceed the capability of the terminal.

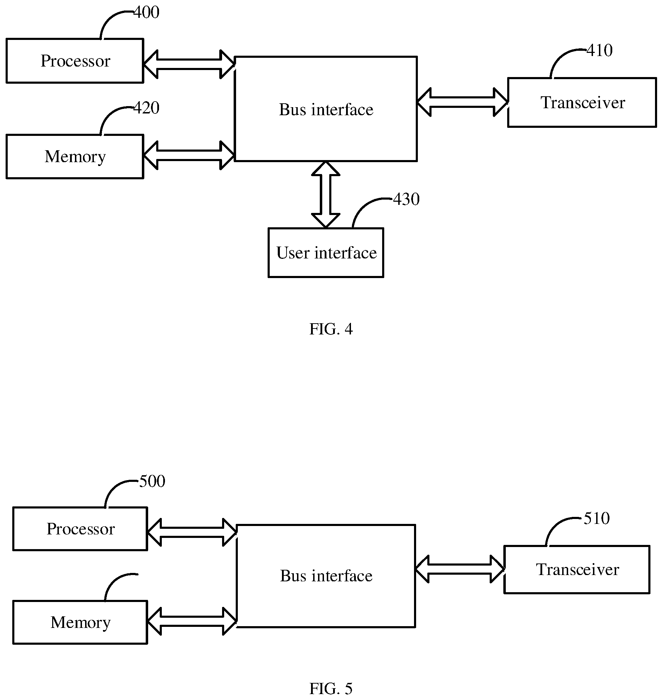

Based on the same inventive concept, an embodiment of the present disclosure further provides a terminal device, as shown in FIG. 4, comprising:
a transceiver 410, configured to receive and transmit data under control of a processor 400.

In FIG. 4, a bus interface may include interconnected buses of any number and bridges of any number, which are specifically linked together through various circuits of one or more processors represented by the processor 400 and various circuits of memories represented by a memory 420. A bus architecture may also link various other circuits such as peripheral devices, voltage regulators, and power management circuits, which are well known in the field, and therefore are not further described herein. A bus interface provides an interface. The transceiver 410 may be a plurality of elements, i.e., it includes a transmitter and a receiver and provides units for communicating with various other devices over transmission media that include wireless channels, wired channels, optical cables, and other transmission media. For different user equipment, the user interface 430 may further be an interface capable of externally and internally connecting desired devices. The connected devices include, but are not limited to, a keypad, a monitor, a speaker, a microphone, a joystick, etc.

The processor 400 is responsible for managing the bus architecture and general processing, and the memory 420 may store data used when the processor 400 executes operations.

Optionally, the processor 400 may be a central processing unit (CPU), an application specific integrated circuit (ASIC), a field-programmable gate array (FPGA), or a complex programmable logic device (CPLD), and the processor may also adopt a multi-core architecture.

The processor is configured to execute any of the methods provided by the embodiments of the present disclosure in accordance with obtained executable instructions by calling a computer program stored in the memory. The processor and memory may also be arranged physically separately.

It needs to be noted herein that the above apparatus provided by the embodiment of the present disclosure can realize all the method steps realized by the above method embodiments, and can achieve the same technical effect, and parts of the embodiment which are the same as those of the method embodiments and the beneficial effects will not be specifically repeated herein.

The processor 400 is configured to execute that:
in a case that the terminal device detects or obtains a sounding reference signal resource indicator (SRI) included in a configured grant (CG) configuration in downlink control information (DCI), an association between a specified parameter and a sounding reference signal (SRS) resource set is determined based on indication information of a network device or a predefined rule;
the SRS resource set is determined based on the association;
an SRS resource is determined based on the SRS resource set; and
a physical uplink shared channel (PUSCH) is transmitted based on the SRS resource.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate the capability value index of the terminal device; or
a third information indication field used to indicate a TCI state.

In some implementations, the indication information includes the CORESETPoolIndex configured in the high-level parameter of the SRS resource set, and the processor is specifically configured to:
detect the CORESET used to transmit the DCI or the PDCCH;
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

In some implementations, the indication information includes the SRS resource set index configured under the CORESET, and the processor is specifically configured to:
detect the CORESET used to transmit the DCI or the PDCCH; and
determine an SRS resource set corresponding to the SRS resource set index configured under the CORESET for transmitting the PUSCH.

In some implementations, the indication information includes the capability value index of the terminal device configured for the CORESET, and the processor is specifically configured to:
detect the CORESET used to transmit the DCI or the PDCCH;
obtain the capability value index of the terminal device configured for the CORESET; and
determine an SRS resource set corresponding to the capability value index of the terminal device configured for the CORESET for transmitting the PUSCH.

In some implementations, the indication information includes the specified information field in the DCI, and the processor is specifically configured to:
obtain the specified information field in the DCI; and
determine an SRS resource set indicated by the specified information field for transmitting the PUSCH.

In some implementations, the indication information includes the specified information field in the DCI, and before obtaining the specified information field in the DCI, the processor is further configured to:
transmit capability information for supporting the specified information field in the DCI to the network device.

In some implementations, the indication information includes the TCI state configuration, and the processor is specifically configured to:
determine the TCI state configuration associated with the DCI; and
determine an SRS resource set associated with the TCI state configuration for transmitting the PUSCH.

In some implementations, the TCI state configuration associated with the DCI includes at least one of the following:
at least one TCI state activated by MAC-CE signaling;
at least one applied TCI state; or
a TCI state associated with a CORESET where the DCI is located or associated with CORESETPoolIndex configured for the CORESET.

In some implementations, the SRS resource set associated with the TCI state configuration includes at least one of the following:
an SRS resource set associated with a TCI state configured by RRC signaling; or
an SRS resource set included in TCI state signaling activated by an MAC CE.

In some implementations, the specified parameter includes the detected CORESET used to transmit the DCI or the PDCCH, and the processor is specifically configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the processor is specifically configured to:
detect the CORESET used to transmit the DCI or the PDCCH; and
select an SRS resource set associated with the CORESET or the CORESETPoolIndex of the CORESET from at least one SRS resource set for transmitting the PUSCH.

In some implementations, based on the predefined rule, the association is determined based on the configured SRS resource set or based on the capability value index reported by the terminal device.

In some implementations, the specified parameter includes the CORESET used to transmit the DCI or the physical downlink control channel (PDCCH), and the association includes an association between the CORESET and the SRS resource set. The processor is further configured to:
determine the association based on the configured SRS resource set by adopting a following mode that:
a first specified CORESET or all first specified CORESETs correspond to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

In some implementations, in a case that the specified parameter includes the CORESET, and the association includes a first relationship between the CORESET and the capability value index, and includes a second relationship between the capability value index and the SRS resource set, the processor is further configured to:
determine the association based on a capability value reported by the terminal device by adopting a following method that:
in a case that the terminal device reports one capability value index, the first relationship is established by the one capability value index and a second specified CORESET or all CORESETs, and the second relationship is established by the one capability value index and a specified SRS resource set; or,
in a case that the terminal device reports the plurality of capability value indexes, the first relationship is established between a part of the plurality of capability value indexes and a CORESET that is not configured with CORESETPoolIndex or a CORESET whose CORESETPoolIndex value is a first value, the first relationship is established between a remaining other part of the plurality of the capability value indexes and a CORESET whose CORESETPoolIndex value is a second value, and the second relationship is established between each capability value index and an SRS resource set specified by each capability value index.

In some implementations, the processor is specifically configured to:
obtain the capability value index associated with the detected CORESET based on the first relationship; and
determine the SRS resource set associated with the capability value index based on the second relationship.

In some implementations, the indication information includes the CORESETPoolIndex configured in the high-level parameter of the SRS resource set, and the processor is specifically configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

In some implementations, the indication information includes the SRS resource set index associated with the CG configuration or the SRI, and the processor is specifically configured to:
determine an SRS resource set corresponding to the SRS resource set index associated with the CG configuration or the SRI for transmitting the PUSCH.

In some implementations, the indication information includes the capability value index of the terminal device associated with the CG configuration or the SRI, and the processor is specifically configured to:
determine an SRS resource set corresponding to the capability value index of the terminal device associated with the CG configuration or the SRI for transmitting the PUSCH.

In some implementations, the indication information includes the TCI state configuration, and the processor is specifically configured to:
determine a TCI state configuration associated with the CG configuration or the SRI; and
determine an SRS resource set associated with the TCI state configuration for transmitting the PUSCH.

In some implementations, for the predefined rule, the association includes:
an association between the CG index configured in the CG configuration and the SRS resource set; or,
an association between the specified RRC parameter configured in the CG configuration and the SRS resource set.

In some implementations, the association between the CG index configured in the CG configuration and the SRS resource set includes that:
an odd CG index corresponds to one SRS resource set of two SRS resource sets configured by the network device, and an even CG index corresponds to the other SRS resource set.

In some implementations, the CG configuration includes a second CG index of another associated CG.

In some implementations, the association between the specified RRC parameter configured in the CG configuration and the SRS resource set includes that:
in a case that a first CG index corresponding to the CG configuration is smaller than the second CG index, then the first CG index corresponds to a first SRS resource set of two SRS resource sets configured by the network device; and
in a case that the first CG index corresponding to the CG configuration is greater than the second CG index, then the first CG index corresponds to a second SRS resource set of the two SRS resource sets configured by the network device.

In some implementations, the association between the specified RRC parameter configured in the CG configuration and the SRS resource set includes that:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

In some implementations, the CG configuration does not include information associated with other CGs, and the association includes that:
the CG configuration corresponds to one SRS resource set of a plurality of SRS resource sets configured by the network device.

Based on the same inventive concept, an embodiment of the present disclosure further provides a network device. As shown in FIG. 5, the network device comprises:
a transceiver 510, configured to receive and transmit data under control of a processor 500.

In FIG. 5, a bus architecture may include interconnected buses of any number and bridges of any number, which are specifically linked together through various circuits of one or more processors represented by the processor 500 and various circuits of memories represented by a memory 520. The bus architecture may also link various other circuits such as peripheral devices, voltage regulators, and power management circuits, which are well known in the field, and therefore are not further described herein. A bus interface provides an interface. The transceiver 510 may be a plurality of elements, i.e., it includes a transmitter and a receiver and provides units for communicating with various other devices over transmission media that include wireless channels, wired channels, optical cables, and other transmission media. The processor 500 is responsible for managing the bus architecture and general processing, and the memory 520 may store data used when the processor 500 executes operations.

The processor 500 may be a central processing unit (CPU), an application specific integrated circuit (ASIC), a field-programmable gate array (FPGA), or a complex programmable logic device (CPLD), and the processor may also adopt a multi-core architecture.

In the present disclosure, the processor 500 is configured to:
configure indication information for a terminal device; and
transmit the indication information to the terminal device;
wherein the indication information is used to determine an association between a specified parameter and a sounding reference signal (SRS) resource set.

In some implementations, the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate a capability value of the terminal device; or
a third information indication field used to indicate a TCI state.

In some implementations, the processor is further configured to:
receive capability information about whether the specified information field in the DCI is supported transmitted by the terminal device; and
configure, in a case that the capability information indicates that the terminal device supports the specified information field in the DCI, the indication information based on the specified information field in the DCI.

In some implementations, the indication information includes the TCI state configuration, and the processor is specifically configured to:
configure, when radio resource control (RRC) signaling configures a TCI state, an associated SRS resource set index for each TCI state; or,
configure, when a media access control unit (MAC CE) activates a TCI state, an SRS resource set index associated with the TCI state; or,
associate each TCI state indicated in the DCI with one SRS resource set index respectively.

In some implementations, the processor is further configured to:
configure at least two physical uplink shared channel (PUSCH) transmission parameters for the terminal device, wherein values of the at least two PUSCH transmission parameters is the same or different.

In some implementations, the processor is further configured to:
configure CG indexes of other associated CGs in the CG configuration.

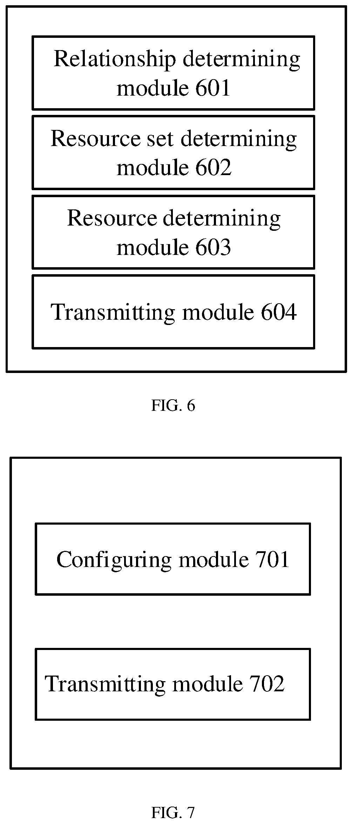

Based on the same inventive concept, an embodiment of the present disclosure further provides a transmission apparatus for a physical uplink shared channel, as shown in FIG. 6, comprising:
a relationship determining module 601, configured to determine, in a case that a sounding reference signal resource indicator (SRI) is included in a configured grant (CG) configuration or in downlink control information (DCI), an association between a specified parameter and a sounding reference signal (SRS) resource set based on indication information of a network device or a predefined rule;
a resource set determining module 602, configured to determine the SRS resource set based on the association;
a resource determining module 603, configured to determine an SRS resource based on the SRS resource set; and
a transmitting module 604, configured to transmit the physical uplink shared channel (PUSCH) based on the SRS resource.

In some implementations, the specified parameter includes at least one of the following: a high-level parameter CORESETPoolIndex, a detected control resource set (CORESET) used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a control resource set (CORESET);
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate the capability value index of the terminal device; or
a third information indication field used to indicate a TCI state.

In some implementations, the indication information includes the CORESETPoolIndex configured in the high-level parameter of the SRS resource set, and the resource set determining module is specifically configured to:
detect the CORESET used to transmit the DCI or the PDCCH;
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

In some implementations, the indication information includes the SRS resource set index configured under the CORESET, and the resource set determining module is specifically configured to:
detect the CORESET used to transmit the DCI or the PDCCH; and
determine an SRS resource set corresponding to the SRS resource set index configured under the CORESET for transmitting the PUSCH.

In some implementations, the indication information includes the capability value index of the terminal device configured for the CORESET, and the resource set determining module is specifically configured to:
detect the CORESET used to transmit the DCI or the PDCCH;
obtain the capability value index of the terminal device configured for the CORESET; and
determine an SRS resource set corresponding to the capability value index of the terminal device configured for the CORESET for transmitting the PUSCH.

In some implementations, the indication information includes the specified information field in the DCI, and the resource set determining module is specifically configured to:
obtain the specified information field in the DCI; and
determine an SRS resource set indicated by the specified information field for transmitting the PUSCH.

In some implementations, the indication information includes the specified information field in the DCI, and before obtaining the specified information field in the DCI, the transmitting module is further configured to:
transmit capability information for supporting the specified information field in the DCI to the network device.

In some implementations, the indication information includes the TCI state configuration, and the resource set determining module is specifically configured to:
determine the TCI state configuration associated with the DCI; and
determine an SRS resource set associated with the TCI state configuration for transmitting the PUSCH.

In some implementations, the TCI state configuration associated with the DCI includes at least one of the following:
at least one TCI state activated by MAC-CE signaling;
at least one applied TCI state; or
a TCI state associated with a CORESET where the DCI is located or associated with CORESETPoolIndex configured for the CORESET.

In some implementations, the SRS resource set associated with the TCI state configuration includes at least one of the following:
an SRS resource set associated with a TCI state configured by RRC signaling; or
an SRS resource set included in TCI state signaling activated by an MAC CE.

In some implementations, the specified parameter includes the detected CORESET used to transmit the DCI or the PDCCH, and the resource set determining module is specifically configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the resource set determining module is specifically configured to:
detect the CORESET used to transmit the DCI or the PDCCH; and
select an SRS resource set associated with the CORESET or the CORESETPoolIndex of the CORESET from at least one SRS resource set for transmitting the PUSCH.

In some implementations, based on the predefined rule, the association is determined based on the configured SRS resource set or based on the capability value index reported by the terminal device.

In some implementations, the specified parameter includes the CORESET used to transmit the DCI or the physical downlink control channel (PDCCH), and the association includes an association between the CORESET and the SRS resource set. The apparatus further comprises:
a first association determining module, configured to determine the association based on the configured SRS resource set, including that:
a first specified CORESET or all first specified CORESETs correspond to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

In some implementations, in a case that the specified parameter includes the CORESET, the association includes a first relationship between the CORESET and the capability value index, and includes a second relationship between the capability value index and the SRS resource set. The apparatus further comprises:
a second association determining module, configured to determine the association based on the capability value reported by the terminal device, including that:
in a case that the terminal device reports one capability value index, the first relationship is established by the one capability value index and a second specified CORESET or all CORESETs, and the second relationship is established by the one capability value index and a specified SRS resource set; or,
in a case that the terminal device reports the plurality of capability value indexes, the first relationship is established between a part of the plurality of capability value indexes and a CORESET that is not configured with CORESETPoolIndex or a CORESET whose CORESETPoolIndex value is a first value, the first relationship is established between a remaining other part of the plurality of the capability value indexes and a CORESET whose CORESETPoolIndex value is a second value, and the second relationship is established between each capability value index and an SRS resource set specified by each capability value index.

In some implementations, when the SRS resource set associated with the CORESET or the CORESETPoolIndex of the CORESET is selected from at least one SRS resource set, the resource set determining module is specifically configured to:
obtain the capability value index associated with the detected CORESET based on the first relationship; and
determine the SRS resource set associated with the capability value index based on the second relationship.

In some implementations, the indication information includes the CORESETPoolIndex configured in the high-level parameter of the SRS resource set, and the resource set determining module is specifically configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

In some implementations, the indication information includes the SRS resource set index associated with the CG configuration or the SRI, and the resource set determining module is specifically configured to:
determine an SRS resource set corresponding to the SRS resource set index associated with the CG configuration or the SRI for transmitting the PUSCH.

In some implementations, the indication information includes the capability value index of the terminal device associated with the CG configuration or the SRI, and the resource set determining module is specifically configured to:
determine an SRS resource set corresponding to the capability value index of the terminal device associated with the CG configuration or the SRI for transmitting the PUSCH.

In some implementations, the indication information includes the TCI state configuration, and the resource set determining module is specifically configured to:
determine a TCI state configuration associated with the CG configuration or the SRI; and
determine an SRS resource set associated with the TCI state configuration for transmitting the PUSCH.

In some implementations, based on the predefined rule, the association includes:
an association between the CG index configured in the CG configuration and the SRS resource set; or,
an association between the specified RRC parameter configured in the CG configuration and the SRS resource set.

In some implementations, the association between the CG index configured in the CG configuration and the SRS resource set includes that:
an odd CG index corresponds to one SRS resource set of two SRS resource sets configured by the network device, and an even CG index corresponds to the other SRS resource set.

In some implementations, the CG configuration includes a second CG index of another associated CG.

In some implementations, the association between the specified RRC parameter configured in the CG configuration and the SRS resource set includes that:
in a case that a first CG index corresponding to the CG configuration is smaller than the second CG index, then the first CG index corresponds to a first SRS resource set of two SRS resource sets configured by the network device; and
in a case that the first CG index corresponding to the CG configuration is greater than the second CG index, then the first CG index corresponds to a second SRS resource set of the two SRS resource sets configured by the network device.

In some implementations, the association between the specified RRC parameter configured in the CG configuration and the SRS resource set includes that:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

In some implementations, the CG configuration does not include information associated with other CGs, and the association includes that:
the CG configuration corresponds to one SRS resource set of a plurality of SRS resource sets configured by the network device.

Based on the same inventive concept, the present disclosure further provides a transmission apparatus for a physical uplink shared channel, as shown in FIG. 7, comprising:
a configuring module 701, configured to configure indication information for a terminal device; and
a transmitting module 702, configured to transmit the indication information to the terminal device;
wherein the indication information is used to determine an association between a specified parameter and a sounding reference signal (SRS) resource set.

In some implementations, the specified parameter includes at least one of the following: a high-level parameter CORESETPoolIndex, a detected control resource set (CORESET) used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

In some implementations, the indication information includes at least one of the following:
CORESETPoolIndex configured in a high-level parameter of the SRS resource set;
an SRS resource set index configured under a control resource set (CORESET);
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

In some implementations, the specified information field in the DCI includes at least one of the following:
a first information indication field used to indicate the SRS resource set;
a second information indication field used to indicate a capability value of the terminal device; or
a third information indication field used to indicate a TCI state.

In some implementation, the apparatus further comprises:
a receiving module, configured to receive capability information about whether the specified information field in the DCI is supported transmitted by the terminal device.

The configuring module is specifically configured to configure, in a case that the capability information indicates that the terminal device supports the specified information field in the DCI, the indication information based on the specified information field in the DCI.

In some implementations, the indication information includes the TCI state configuration, and then the configuring module is specifically configured to:
configure, when radio resource control (RRC) signaling configures a TCI state, an associated SRS resource set index for each TCI state; or,
configure, when a media access control unit (MAC CE) activates a TCI state, an SRS resource set index associated with the TCI state; or,
associate each TCI state indicated in the DCI with one SRS resource set index respectively.

In some implementations, the configuring module is further configured to:
configure at least two PUSCH transmission parameters for the terminal device, wherein values of the at least two PUSCH transmission parameters is the same or different.

In some implementations, the configuring module is further configured to:
configure CG indexes of other associated CGs in the CG configuration.

It needs to be noted that the division of the units in the embodiments of the present disclosure is schematic and is only a logical functional division, and there may be other division modes when actually realized. In addition, the various functional units in various embodiments of the present disclosure may be integrated in a single processing unit, or each unit may exist physically separately, or two or more units may be integrated in a single unit. The above integrated unit may be realized either in the form of hardware or in the form of a software functional unit.

The integrated unit may be stored in a processor-readable storage medium if implemented in the form of a software functional unit and sold or used as a stand-alone product. Based on this understanding, the technical solution of the present disclosure may be embodied in the form of a software product essentially or on the part of contributions to the prior art or all or part of the technical solution. The computer software product is stored in a storage medium and includes a plurality of instructions configured to enable a computer device (a personal computer, or a server or a network device, etc.) to execute all or part of the steps of the method of all the embodiments of the present disclosure. The aforementioned storage media include: a USB flash disk, a mobile hard disk, a read-only memory (ROM), a random access memory (RAM), a magnetic disk or an optical disk and other media that can store program codes.

It needs to be noted herein that the above apparatus provided by the embodiment of the present disclosure can realize all the method steps realized by the above method embodiments, and can achieve the same technical effect, and parts of the embodiment which are the same as those of the method embodiments and the beneficial effects will not be specifically repeated herein.

The processor-readable storage medium may be any usable medium or data storage device that the processor is able to access, including, but not limited to, a magnetic memory (e.g., a floppy disk, a hard disk, a magnetic tape, a magnetic optical disk (MO), etc.), an optical memory (e.g., a CD, a DVD, a BD, an HVD, etc.), and a semiconductor memory (e.g., a ROM, an EPROM, an EEPROM, a non-volatile memory (NAND FLASH), and a solid-state drive (SSD)).

Those skilled in the art will appreciate that the embodiments of the present disclosure may be provided as methods, systems, or computer program products. Therefore, the present disclosure may take the form of a full hardware embodiment, a full software embodiment, or an embodiment combining software and hardware. Besides, the present disclosure may adopt the form of a computer program product implemented on one or more computer available storage media (including but not limited to a disk memory, an optical memory and the like) containing computer available program codes.

The present disclosure is described with reference to the flowchart and/or block diagram of the method, device (system), and computer program product according to the embodiments of the present disclosure. It should be understood that each flow and/or block in the flowchart and/or block diagram and the combination of flows and/or blocks in the flowchart and/or block diagram can be implemented by computer-executable instructions. These computer-executable instructions may be provided to a processor of a general-purpose computer, a special-purpose computer, an embedded processor, or other programmable data-processing devices to produce a machine such that the instructions executed by the processor of the computer or other programmable data-processing devices produce an apparatus for implementing the functions specified in one process or more processes of the flowchart and/or one block or more blocks of the block diagram.

These processor-executable instructions can also be stored in a processor-readable memory capable of guiding a computer or other programmable data processing devices to work in a specific manner, so that instructions stored in the processor-readable memory generate a manufacturing product including an instruction apparatus, and the instruction apparatus implements the functions specified in one or more flows of the flowchart and/or one or more blocks of the block diagram.

These processor-executable instructions can also be loaded on a computer or other programmable data processing devices, so that a series of operation steps are executed on the computer or other programmable devices to produce computer-implemented processing, and thus, the instructions executed on the computer or other programmable devices provide steps for implementing the functions specified in one or more flows of the flowchart and/or one or more blocks of the block diagram.

Apparently, those of skill in the art can make various modifications and variations to the present disclosure without departing from the spirit and scope of the present disclosure. In this way, under the condition that these modifications and variations of the present disclosure fall within the scope of the claims of the present disclosure and their equivalent technologies, the present disclosure is also intended to include these modifications and variations.

## Claims

1. A transmission method for a physical uplink shared channel, applied to a terminal device, **characterized by** comprising:
determining (101, 201), in a case that a sounding reference signal resource indicator (SRI) is included in a configured grant (CG) configuration or in downlink control information (DCI), an association between a specified parameter and a sounding reference signal (SRS) resource set based on indication information of a network device or a predefined rule;
determining (102, 202) the SRS resource set based on the association;
determining (103, 203) an SRS resource based on the SRS resource set; and
transmitting (104, 204) the physical uplink shared channel (PUSCH) based on the SRS resource.

2. The method according to claim 1, **characterized in that** the specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

3. The method according to claim 1, **characterized in that** the indication information includes at least one of the following:
CORESETPoolIndex configured in a high-level parameter of the SRS resource set;
an SRS resource set index configured under a control resource set (CORESET);
a capability value index of the terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

4. The method according to claim 3, **characterized in that** the specified information field in the DCI includes at least one of the following:
a first information indication field used to indicate the SRS resource set;
a second information indication field used to indicate the capability value index of the terminal device; or
a third information indication field used to indicate a TCI state.

5. The method according to claim 3, **characterized in that** the indication information includes the CORESETPoolIndex configured in the high-level parameter of the SRS resource set, and determining the SRS resource set comprises:
detecting the CORESET used to transmit the DCI or a PDCCH;
obtaining the CORESETPoolIndex of the CORESET; and
selecting an SRS resource set whose CORESETPoolIndex configured in the high-level parameter of the SRS resource set is the same as the CORESETPoolIndex of the CORESET from at least one SRS resource set for transmitting the PUSCH.

6. The method according to claim 3, **characterized in that** the indication information includes the SRS resource set index configured under the CORESET, and determining the SRS resource set comprises:
detecting the CORESET used to transmit the DCI or a PDCCH; and
determining an SRS resource set corresponding to the SRS resource set index configured under the CORESET for transmitting the PUSCH.

7. The method according to claim 3, **characterized in that** the indication information includes the capability value index of the terminal device configured for the CORESET, and determining the SRS resource set comprises:
detecting the CORESET used to transmit the DCI or a PDCCH;
obtaining the capability value index of the terminal device configured for the CORESET; and
determining an SRS resource set corresponding to the capability value index of the terminal device configured for the CORESET for transmitting the PUSCH.

8. The method according to claim 3, **characterized in that** the indication information includes the specified information field in the DCI, and determining the SRS resource set comprises:
obtaining the specified information field in the DCI; and
determining an SRS resource set indicated by the specified information field for transmitting the PUSCH.

9. The method according to claim 8, **characterized in that** the indication information includes the specified information field in the DCI, and before obtaining the specified information field in the DCI, the method further comprises:
transmitting capability information for supporting the specified information field in the DCI to the network device.

10. The method according to claim 3, **characterized in that** the indication information includes the TCI state configuration, and determining the SRS resource set comprises:
determining the TCI state configuration associated with the DCI; and
determining an SRS resource set associated with the TCI state configuration for transmitting the PUSCH.

11. The method according to claim 10, **characterized in that** the TCI state configuration associated with the DCI comprises at least one of the following:
at least one TCI state activated by MAC-CE signaling;
at least one applied TCI state; or
a TCI state associated with a CORESET where the DCI is located or associated with CORESETPoolIndex configured for the CORESET.

12. The method according to claim 10, **characterized in that** the SRS resource set associated with the TCI state configuration comprises at least one of the following:
an SRS resource set associated with a TCI state configured by RRC signaling; or
an SRS resource set included in TCI state signaling activated by an MAC CE.

13. The method according to claim 2, **characterized in that** the specified parameter includes the detected CORESET used to transmit the DCI or the PDCCH, and determining the SRS resource set based on the association comprises:
detecting the CORESET used to transmit the DCI or the PDCCH; and
selecting an SRS resource set associated with the CORESET from at least one SRS resource set for transmitting the PUSCH;
or, the specified parameter includes the CORESET used to transmit the DCI or the PDCCH and the CORESETPoolIndex, and determining the SRS resource set based on the association comprises:
detecting the CORESET used to transmit the DCI or the PDCCH; and
selecting an SRS resource set associated with the CORESET or the CORESETPoolIndex of the CORESET from at least one SRS resource set for transmitting the PUSCH.

14. The method according to claim 13, **characterized in that** based on the predefined rule, the association is determined based on configured SRS resource set or based on the capability value index reported by the terminal device.

15. The method according to claim 14, **characterized in that** the specified parameter includes the CORESET used to transmit the DCI or the physical downlink control channel (PDCCH), the association comprises an association between the CORESET and the SRS resource set, and determining the association based on the configured SRS resource set comprises:
a first specified CORESET or all first specified CORESETs corresponds to an SRS resource set; or,
a second specified CORESET corresponds to one SRS resource set of two resource sets configured by the network device, and a third specified CORESET corresponds to the other SRS resource set; or,
the second specified CORESET corresponds to a set of first SRS resource sets of a plurality of SRS resource sets configured by the network device, and the third specified CORESET corresponds to a set of second SRS resource sets of the plurality of resource sets.

16. The method according to claim 14, **characterized in that** based on that the specified parameter includes the CORESET, the association includes a first relationship between the CORESET and the capability value index, and includes a second relationship between the capability value index and the SRS resource set, and determining the association based on a capability value reported by the terminal device comprises:
establishing, in a case that one capability value index is reported by the terminal device, the first relationship between the one capability value index and a second specified CORESET or all CORESETs, and establishing the second relationship between the one capability value index and a specified SRS resource set; or,
establishing, in a case that a plurality of capability value indexes are reported by the terminal device, the first relationship between a part of the plurality of the capability value indexes and a CORESET that is not configured with CORESETPoolIndex or a CORESET whose CORESETPoolIndex value is a first value, establishing the first relationship between remaining other part of the plurality of the capability value indexes and a CORESET whose CORESETPoolIndex value is a second value, and establishing the second relationship between each capability value index and an SRS resource set specified by each capability value index.

17. The method according to claim 16, **characterized in that** selecting the SRS resource set associated with the CORESET or the CORESETPoolIndex of the CORESET from the at least one SRS resource set comprises:
obtaining the capability value index associated with the detected CORESET based on the first relationship; and
determining the SRS resource set associated with the capability value index based on the second relationship.

18. The method according to claim 3, **characterized in that** the indication information includes the CORESETPoolIndex configured in the high-level parameter of the SRS resource set, and determining the SRS resource set comprises:
obtaining the CORESETPoolIndex associated with the CG configuration or the SRI; and
selecting an SRS resource set whose CORESETPoolIndex configured in the high-level parameter of the SRS resource set is the same as the CORESETPoolIndex associated with the CG configuration or the SRI from at least one SRS resource set for transmitting the PUSCH.

19. The method according to claim 3, **characterized in that** the indication information includes the SRS resource set index associated with the CG configuration or the SRI, and determining the SRS resource set comprises:
using an SRS resource set corresponding to the SRS resource set index associated with the CG configuration or the SRI for transmitting the PUSCH.

20. The method according to claim 3, **characterized in that** the indication information includes the capability value index of the terminal device associated with the CG configuration or the SRI, and determining the SRS resource set comprises:
determining an SRS resource set corresponding to the capability value index of the terminal device associated with the CG configuration or the SRI for transmitting the PUSCH.

21. The method according to claim 3, **characterized in that** the indication information includes the TCI state configuration, and determining the SRS resource set comprises:
determining a TCI state configuration associated with the CG configuration or the SRI; and
determining an SRS resource set associated with the TCI state configuration for transmitting the PUSCH.

22. The method according to claim 2, **characterized in that** based on the predefined rule, the association includes:
an association between the CG index configured in the CG configuration and the SRS resource set; or,
an association between the specified RRC parameter configured in the CG configuration and the SRS resource set.

23. The method according to claim 22, **characterized in that** the association between the CG index configured in the CG configuration and the SRS resource set includes:
an odd CG index corresponds to one SRS resource set of two SRS resource sets configured by the network device, and an even CG index corresponds to the other SRS resource set.

24. The method according to claim 22, **characterized in that** the CG configuration includes a second CG index of another associated CG.

25. The method according to claim 24, **characterized in that** the association between the specified RRC parameter configured in the CG configuration and the SRS resource set includes:
in a case that a first CG index corresponds to the CG configuration is smaller than the second CG index, the first CG index corresponds to a first SRS resource set of two SRS resource sets configured by the network device; and
in a case that the first CG index corresponds to the CG configuration is greater than the second CG index, the first CG index corresponds to a second SRS resource set of the two SRS resource sets configured by the network device.

26. The method according to claim 22, **characterized in that** the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

27. The method according to claim 2, **characterized in that** the CG configuration does not include information associated with other CGs, and the association includes:
the CG configuration corresponds to one SRS resource set of a plurality of SRS resource sets configured by the network device.

28. A transmission method for a physical uplink shared channel, applied to a network device, **characterized by** comprising:
configuring (301) indication information for a terminal device; and
transmitting (302) the indication information to the terminal device;
wherein the indication information is used to determine an association between a specified parameter and a sounding reference signal (SRS) resource set.

29. The method according to claim 28, **characterized in that** the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a configured grant (CG) index, or a specified radio resource control (RRC) parameter.

30. The method according to claim 28, **characterized in that** the indication information includes at least one of the following:
CORESETPoolIndex configured in a high-level parameter of the SRS resource set;
an SRS resource set index configured under a CORESET;
a capability value index of the terminal device configured for the CORESET;
a transmission configuration indication (TCI) state configuration;
a specified information field in the DCI;
CORESETPoolIndex associated with a CG configuration or a sounding reference signal resource indicator (SRI);
an SRS resource set index associated with the CG configuration or the SRI;
a capability value index of the terminal device associated with the CG configuration or the SRI;
a CG index configured in the CG configuration; or
a specified radio resource control (RRC) parameter configured in the CG configuration.

31. The method according to claim 30, **characterized in that** the specified information field in the DCI includes at least one of the following:
a first information indication field used to indicate the SRS resource set;
a second information indication field used to indicate a capability value of the terminal device; or
a third information indication field used to indicate a TCI state.

32. The method according to claim 29, **characterized by** further comprising:
receiving capability information about whether the specified information field in the DCI is supported transmitted by the terminal device; and
configuring, in a case that the capability information indicates that the specified information field in the DCI is supported by the terminal device, the indication information based on the specified information field in the DCI.

33. The method according to claim 28, **characterized in that** the indication information includes a TCI state configuration, and configuring the indication information used to indicate the SRS resource set for the terminal device comprises:
configuring, when configuring TCI states through radio resource control (RRC) signaling, an associated SRS resource set index for each TCI state; or,
configuring, when activating TCI states through a media access control unit (MAC CE), an SRS resource set index associated with the TCI state; or,
associating each TCI state indicated in DCI with one SRS resource set index respectively.

34. The method according to claim 28, **characterized by** further comprising:
configuring at least two physical uplink shared channel (PUSCH) transmission parameters for the terminal device, wherein values of the at least two PUSCH transmission parameters are the same or different.

35. The method according to claim 28, **characterized by** comprising:
configuring CG indexes of other associated CGs in a CG configuration.

36. A terminal device, **characterized by** comprising a memory, a transceiver, and a processor, wherein
the memory is configured to store a computer program;
the transceiver is configured to receive and transmit information under control of the processor; and
the processor is configured to read the computer program in the memory and execute following steps:
determining, in a case that a sounding reference signal resource indicator (SRI) is included in a configured grant (CG) configuration or in downlink control information (DCI), an association between a specified parameter and a sounding reference signal (SRS) resource set based on indication information of a network device or a predefined rule;
determining the SRS resource set based on the association;
determining an SRS resource based on the SRS resource set; and
transmitting a physical uplink shared channel (PUSCH) based on the SRS resource.

37. The device according to claim 36, **characterized in that** the specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

38. The device according to claim 36, **characterized in that** the indication information includes at least one of the following:
CORESETPoolIndex configured in a high-level parameter of the SRS resource set;
an SRS resource set index configured under a control resource set (CORESET);
a capability value index of the terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

39. The device according to claim 38, **characterized in that** the specified information field in the DCI includes at least one of the following:
a first information indication field used to indicate the SRS resource set;
a second information indication field used to indicate the capability value index of the terminal device; or
a third information indication field used to indicate a TCI state.

40. The device according to claim 38, **characterized in that** the indication information includes the CORESETPoolIndex configured in the high-level parameter of the SRS resource set, and the processor is configured to:
detect the CORESET used to transmit the DCI or the PDCCH;
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

41. The device according to claim 38, **characterized in that** the indication information includes the SRS resource set index configured under the CORESET, and the processor is configured to:
detect the CORESET used to transmit the DCI or the PDCCH; and
determine an SRS resource set corresponding to the SRS resource set index configured under the CORESET for transmitting the PUSCH.

42. The device according to claim 38, **characterized in that** the indication information includes the capability value index of the terminal device configured for the CORESET, and the processor is configured to:
detect the CORESET used to transmit the DCI or the PDCCH;
obtain the capability value index of the terminal device configured for the CORESET; and
determine an SRS resource set corresponding to the capability value index of the terminal device configured for the CORESET for transmitting the PUSCH.

43. The device according to claim 38, **characterized in that** the indication information includes the specified information field in the DCI, and the processor is configured to:
obtain the specified information field in the DCI; and
determine an SRS resource set indicated by the specified information field for transmitting the PUSCH.

44. The device according to claim 43, **characterized in that** the indication information includes the specified information field in the DCI, and before obtaining the specified information field in the DCI, the processor is further configured to:
transmit capability information for supporting the specified information field in the DCI to the network device.

45. The device according to claim 38, **characterized in that** the indication information includes the TCI state configuration, and the processor is configured to:
determine the TCI state configuration associated with the DCI; and
determine an SRS resource set associated with the TCI state configuration for transmitting the PUSCH.

46. The device according to claim 45, **characterized in that** the TCI state configuration associated with the DCI comprises at least one of the following:
at least one TCI state activated by MAC-CE signaling;
at least one applied TCI state; or
a TCI state associated with a CORESET where the DCI is located or associated with CORESETPoolIndex configured for the CORESET.

47. The device according to claim 45, **characterized in that** the SRS resource set associated with the TCI state configuration comprises at least one of the following:
an SRS resource set associated with a TCI state configured by RRC signaling; or
an SRS resource set included in TCI state signaling activated by an MAC CE.

48. The device according to claim 37, **characterized in that** the specified parameter includes the detected CORESET used to transmit the DCI or the PDCCH, and the processor is configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the processor is configured to:
detect the CORESET used to transmit the DCI or the PDCCH; and
select an SRS resource set associated with the CORESET or the CORESETPoolIndex of the CORESET from at least one SRS resource set for transmitting the PUSCH.

49. The device according to claim 48, **characterized in that** based on the predefined rule, the association is determined based on configured SRS resource set or based on the capability value index reported by the terminal device.

50. The device according to claim 49, **characterized in that** the specified parameter includes the CORESET used to transmit the DCI or the physical downlink control channel (PDCCH), the association comprises an association between the CORESET and the SRS resource set, and the processor is further configured to
determine the association based on the configured SRS resource set using at least one of following modes:
a first specified CORESET or all first specified CORESETs corresponds to an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

51. The device according to claim 49, **characterized in that** based on that the specified parameter includes the CORESET, the association includes a first relationship between the CORESET and the capability value index, and includes a second relationship between the capability value index and the SRS resource set, and the processor is further configured to:
determine the association based on a capability value reported by the terminal device using at least one of following methods:
establishing, in a case that one capability value index is reported by the terminal device, the first relationship between the one capability value index and a second specified CORESET or all CORESETs, and establishing the second relationship between the one capability value index and a specified SRS resource set; or,
establishing, in a case that a plurality of capability value indexes are reported by the terminal device, the first relationship between a part of the plurality of the capability value indexes and a CORESET that is not configured with CORESETPoolIndex or a CORESET whose CORESETPoolIndex value is a first value, establishing the first relationship between a remaining other part of the plurality of the capability value indexes and a CORESET whose CORESETPoolIndex value is a second value, and establishing the second relationship between each capability value index and an SRS resource set specified by each capability value.

52. The device according to claim 51, **characterized in that** the processor is configured to:
obtain the capability value index associated with the detected CORESET based on the first relationship; and
determine the SRS resource set associated with the capability value index based on the second relationship.

53. The device according to claim 38, **characterized in that** the indication information includes the CORESETPoolIndex configured in the high-level parameter of the SRS resource set, and the processor is configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

54. The device according to claim 38, **characterized in that** the indication information includes the SRS resource set index associated with the CG configuration or the SRI, and the processor is configured to:
use an SRS resource set corresponding to the SRS resource set index associated with the CG configuration or the SRI for transmitting the PUSCH.

55. The device according to claim 38, **characterized in that** the indication information includes the capability value index of the terminal device associated with the CG configuration or the SRI, and the processor is configured to:
determine an SRS resource set corresponding to the capability value index of the terminal device associated with the CG configuration or the SRI for transmitting the PUSCH.

56. The device according to claim 38, **characterized in that** the indication information includes the TCI state configuration, and the processor is configured to:
determine a TCI state configuration associated with the CG configuration or the SRI; and
determine an SRS resource set associated with the TCI state configuration for transmitting the PUSCH.

57. The device according to claim 37, **characterized in that** based on the predefined rule, the association includes:
an association between the CG index configured in the CG configuration and the SRS resource set; or,
an association between the specified RRC parameter configured in the CG configuration and the SRS resource set.

58. The device according to claim 57, **characterized in that** the association between the CG index configured in the CG configuration and the SRS resource set includes:
an odd CG index corresponds to one SRS resource set of two SRS resource sets configured by the network device, and an even CG index corresponds to the other SRS resource set.

59. The device according to claim 57, **characterized in that** the CG configuration includes a second CG index of another associated CG.

60. The device according to claim 59, **characterized in that** the association between the specified RRC parameter configured in the CG configuration and the SRS resource set includes:
in a case that a first CG index corresponds to the CG configuration is smaller than the second CG index, then the first CG index corresponds to a first SRS resource set of two SRS resource sets configured by the network device; and
in a case that the first CG index corresponds to the CG configuration is greater than the second CG index, then the first CG index corresponds to a second SRS resource set of the two SRS resource sets configured by the network device.

61. The device according to claim 57, **characterized in that** the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponding to the other SRS resource set; wherein one or two of the first RRC parameter and the second RRC parameter are configured in the CG configuration.

62. The device according to claim 37, **characterized in that** the CG configuration does not comprise information associated with other CGs, and the association includes:
the CG configuration corresponds to one SRS resource set of a plurality of SRS resource sets configured by the network device.

63. A network device, **characterized by** comprising a memory, a transceiver, and a processor, wherein
the memory is configured to store a computer program;
the transceiver is configured to receive and transmit information under control of the processor; and
the processor is configured to read the computer program in the memory and execute following steps:
configuring indication information for a terminal device; and
transmitting the indication information to the terminal device;
wherein the indication information is used to determine an association between a specified parameter and a sounding reference signal (SRS) resource set.

64. The device according to claim 63, **characterized in that** the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

65. The device according to claim 63, **characterized in that** the indication information includes at least one of the following:
CORESETPoolIndex configured in a high-level parameter of the SRS resource set;
an SRS resource set index configured under a CORESET;
a capability value index of the terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

66. The device according to claim 65, **characterized in that** the specified information field in the DCI includes at least one of the following:
a first information indication field used to indicate the SRS resource set;
a second information indication field used to indicate a capability value of the terminal device; or
a third information indication field used to indicate a TCI state.

67. The device according to claim 65, **characterized in that** the processor is further configured to:
receive capability information about whether the specified information field in the DCI is supported transmitted by the terminal device; and
configure, in a case that the capability information indicates that the specified information field in the DCI is supported by the terminal device, the indication information based on the specified information field in the DCI.

68. The device according to claim 64, **characterized in that** the indication information includes the TCI state configuration, and the processor is configured to:
configure, when configuring TCI states through radio resource control (RRC) signaling, an associated SRS resource set index for each TCI state; or,
configure, when activating TCI states through a media access control unit (MAC CE), an SRS resource set index associated with the TCI state; or,
associate each TCI state indicated in DCI with one SRS resource set index respectively.

69. The device according to claim 63, **characterized in that** the processor is further configured to:
configure at least two physical uplink shared channel (PUSCH) transmission parameters for the terminal device, wherein values of the at least two PUSCH transmission parameters are the same or different.

70. The device according to claim 63, **characterized in that** the processor is further configured to:
configure CG indexes of other associated CGs in a CG configuration.

71. A transmission apparatus for a physical uplink shared channel, **characterized by** comprising:
a relationship determining module, configured to determine, in a case that a sounding reference signal resource indicator (SRI) is included in a configured grant (CG) configuration or in downlink control information (DCI), an association between a specified parameter and a sounding reference signal (SRS) resource set based on indication information of a network device or a predefined rule;
a resource set determining module, configured to determine the SRS resource set based on the association;
a resource determining module, configured to determine an SRS resource based on the SRS resource set; and
a transmitting module, configured to transmit the physical uplink shared channel (PUSCH) based on the SRS resource.

72. The apparatus according to claim 71, **characterized in that** the specified parameter includes at least one of the following: a high-level parameter CORESETPoolIndex, a detected control resource set (CORESET) used to transmit the DCI or a physical downlink control channel (PDCCH), a transmission configuration indication (TCI) state configuration, a specified information field in the DCI, a capability value index of a terminal device, an SRS resource set index, a CG index, or a specified radio resource control (RRC) parameter.

73. The apparatus according to claim 71, **characterized in that** the indication information includes at least one of the following:
CORESETPoolIndex configured in a high-level parameter of the SRS resource set;
an SRS resource set index configured under a control resource set (CORESET);
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

74. The apparatus according to claim 73, **characterized in that** the specified information field in the DCI includes at least one of the following:
a first information indication field used to indicate the SRS resource set;
a second information indication field used to indicate the capability value index of the terminal device; or
a third information indication field used to indicate a TCI state.

75. The apparatus according to claim 73, **characterized in that** the indication information includes the CORESETPoolIndex configured in the high-level parameter of the SRS resource set, and the resource set determining module is configured to:
detect the CORESET used to transmit the DCI or the PDCCH; and
obtain CORESETPoolIndex of the CORESET; and
select an SRS resource set whose CORESETPoolIndex configured in the high-level parameter of the SRS resource set is the same as the CORESETPoolIndex of the CORESET from at least one SRS resource set for transmitting the PUSCH.

76. The apparatus according to claim 73, **characterized in that** the indication information includes the SRS resource set index configured under the CORESET, and the resource set determining module is configured to:
detect the CORESET used to transmit the DCI or the PDCCH; and
determine an SRS resource set corresponding to the SRS resource set index configured under the CORESET for transmitting the PUSCH.

77. The apparatus according to claim 73, **characterized in that** the indication information includes the capability value index of the terminal device configured for the CORESET, and the resource set determining module is configured to:
detect the CORESET used to transmit the DCI or the PDCCH; and
obtain the capability value index of the terminal device configured for the CORESET; and
determine an SRS resource set corresponding to the capability value index of the terminal device configured for the CORESET for transmitting the PUSCH.

78. The apparatus according to claim 73, **characterized in that** the indication information includes the specified information field in the DCI, and the resource set determining module is configured to:
obtain the specified information field in the DCI; and
determine an SRS resource set indicated by the specified information field for transmitting the PUSCH.

79. The apparatus according to claim 78, **characterized in that** the indication information includes the specified information field in the DCI, and before obtaining the specified information field in the DCI, the transmitting module is further configured to:
transmit capability information for supporting the specified information field in the DCI to the network device.

80. The apparatus according to claim 73, **characterized in that** the indication information includes the TCI state configuration, and the resource set determining module is configured to:
determine the TCI state configuration associated with the DCI; and
determine an SRS resource set associated with the TCI state configuration for transmitting the PUSCH.

81. The apparatus according to claim 80, **characterized in that** the TCI state configuration associated with the DCI comprises at least one of the following:
at least one TCI state activated by MAC-CE signaling;
at least one applied TCI state; or
a TCI state associated with a CORESET where the DCI is located or associated with CORESETPoolIndex configured for the CORESET.

82. The apparatus according to claim 80, **characterized in that** the SRS resource set associated with the TCI state configuration comprises at least one of the following:
an SRS resource set associated with a TCI state configured by RRC signaling; or
an SRS resource set included in TCI state signaling activated by an MAC CE.

83. The apparatus according to claim 72, **characterized in that** the specified parameter includes the detected CORESET used to transmit the DCI or the PDCCH, and the resource set determining module is configured to:
detect the CORESET used to transmit the DCI or the PDCCH; and
select an SRS resource set associated with the CORESET from at least one SRS resource set for transmitting the PUSCH;
or, the specified parameter includes the CORESET used to transmit the DCI or the PDCCH and the CORESETPoolIndex, and the resource set determining module is configured to:
detect the CORESET used to transmit the DCI or the PDCCH; and
select an SRS resource set associated with the CORESET or the CORESETPoolIndex of the CORESET from at least one SRS resource set for transmitting the PUSCH.

84. The apparatus according to claim 83, **characterized in that** based on the predefined rule, the association is determined based on configured SRS resource set or based on the capability value index reported by the terminal device.

85. The apparatus according to claim 84, **characterized in that** the specified parameter includes the CORESET used to transmit the DCI or the physical downlink control channel (PDCCH), the association comprises an association between the CORESET and the SRS resource set, and the relationship determining module is further configured to:
determine the association based on the configured SRS resource set using at least one of following modes:
a first specified CORESET or all first specified CORESETs correspondsto an SRS resource set; or,
a second specified CORESET corresponds to one SRS resource set of two resource sets configured by the network device, and a third specified CORESET corresponds to the other SRS resource set; or,
the second specified CORESET corresponds to a set of first resource sets of a plurality of SRS resource sets configured by the network device, and the third specified CORESET corresponds to a set of second resource sets of the plurality of resource sets.

86. The apparatus according to claim 84, **characterized in that** based on that the specified parameter includes the CORESET, the association includes a first relationship between the CORESET and the capability value index, and includes a second relationship between the capability value index and the SRS resource set, and the relationship determining module is further configured to:
determine the association based on a capability value reported by the terminal device using at least one of following methods:
establishing, in a case that one capability value index is reported by the terminal device, the first relationship between the one capability value index and a second specified CORESET or all CORESETs, and establishing the second relationship between the one capability value index and a specified SRS resource set; or,
establishing, in a case that a plurality of capability value indexes are reported by the terminal device, the first relationship between a part of the plurality of the capability value indexes indexes and a CORESET that is not configured with CORESETPoolIndex or a CORESET whose CORESETPoolIndex value is a first value, establishing the first relationship between a remaining other part of the plurality of the capability value indexes and a CORESET whose CORESETPoolIndex value is a second value, and establishing the second relationship between each capability value index and an SRS resource set specified by each capability value index.

87. The apparatus according to claim 86, **characterized in that** the resource set determining module is specifically configured to:
obtain the capability value index associated with the detected CORESET based on the first relationship; and
determine the SRS resource set associated with the capability value index based on the second relationship.

88. The apparatus according to claim 73, **characterized in that** the indication information includes the CORESETPoolIndex configured in the high-level parameter of the SRS resource set, and the resource set determining module is configured to:
obtain the CORESETPoolIndex associated with the CG configuration or the SRI; and
select an SRS resource set whose CORESETPoolIndex configured in the high-level parameter of the SRS resource set is the same as the CORESETPoolIndex associated with the CG configuration or the SRI from at least one SRS resource set for transmitting the PUSCH.

89. The apparatus according to claim 73, **characterized in that** the indication information includes the SRS resource set index associated with the CG configuration or the SRI, and the resource set determining module is configured to:
use an SRS resource set corresponding to the SRS resource set index associated with the CG configuration or the SRI for transmitting the PUSCH.

90. The apparatus according to claim 73, **characterized in that** the indication information includes the capability value index of the terminal device associated with the CG configuration or the SRI, and the resource set determining module is configured to:
determine an SRS resource set corresponding to the capability value index of the terminal device associated with the CG configuration or the SRI for transmitting the PUSCH.

91. The apparatus according to claim 73, **characterized in that** the indication information includes the TCI state configuration, and the resource set determining module is configured to:
determine a TCI state configuration associated with the CG configuration or the SRI; and
determine an SRS resource set associated with the TCI state configuration for transmitting the PUSCH.

92. The apparatus according to claim 72, **characterized in that** based on the predefined rule, the association includes:
an association between the CG index configured in the CG configuration and the SRS resource set; or,
an association between the specified RRC parameter configured in the CG configuration and the SRS resource set.

93. The apparatus according to claim 92, **characterized in that** the association between the CG index configured in the CG configuration and the SRS resource set includes:
an odd CG index corresponds to one SRS resource set of two SRS resource sets configured by the network device, and an even CG index correspondsto the other SRS resource set.

94. The apparatus according to claim 92, **characterized in that** the CG configuration includes a second CG index of another associated CG.

95. The apparatus according to claim 94, **characterized in that** the association between the specified RRC parameter configured in the CG configuration and the SRS resource set includes:
in a case that a first CG index corresponds to the CG configuration is smaller than the second CG index, then the first CG index corresponds to a first SRS resource set of two SRS resource sets configured by the network device; and
in a case that the first CG index corresponds to the CG configuration is greater than the second CG index, then the first CG index corresponds to a second SRS resource set of the two SRS resource sets configured by the network device.

96. The apparatus according to claim 92, **characterized in that** the association between the specified RRC parameter configured in the CG configuration and the SRS resource set includes:
a first RRC parameter configured in the CG configuration corresponds to one SRS resource set of two SRS resource sets configured by the network device, and a second RRC parameter corresponds to the other SRS resource set; wherein one or two of the first RRC parameter and the second RRC parameter are configured in the CG configuration.

97. The apparatus according to claim 72, **characterized in that** the CG configuration does not comprise information associated with other CGs, and the association includes:
the CG configuration corresponds to one SRS resource set of a plurality of SRS resource sets configured by the network device.

98. A transmission apparatus for a physical uplink shared channel, **characterized by** comprising:
a configuring module, configured to configure indication information for a terminal device; and
a transmitting module, configured to transmit the indication information to the terminal device;
wherein the indication information is used to determine an association between a specified parameter and a sounding reference signal (SRS) resource set.

99. The apparatus according to claim 98, **characterized in that** the specified parameter includes at least one of the following: a high-level parameter CORESETPoolIndex, a detected CORESET used to transmit DCI or a physical downlink control channel (PDCCH), a transmission configuration indication (TCI) state configuration, a specified information field in the DCI, a capability value index of the terminal device, an SRS resource set index, a CG index, or a specified radio resource control (RRC) parameter.

100. The apparatus according to claim 98, **characterized in that** the indication information includes at least one of the following:
CORESETPoolIndex configured in a high-level parameter of the SRS resource set;
an SRS resource set index configured under a CORESET;
a capability value index of a terminal device configured for the CORESET;
a transmission configuration indication (TCI) state configuration;
a specified information field in the DCI;
CORESETPoolIndex associated with the CG configuration or the SRI;
an SRS resource set index associated with the CG configuration or the SRI;
a capability value index of the terminal device associated with the CG configuration or the SRI;
a CG index associated in the CG configuration; or
a specified radio resource control (RRC) parameter associated in the CG configuration.

101. The apparatus according to claim 100, **characterized in that** the specified information field in the DCI includes at least one of the following:
a first information indication field used to indicate the SRS resource set;
a second information indication field used to indicate a capability value of the terminal device; or
a third information indication field used to indicate a TCI state.

102. The apparatus according to claim 100, **characterized in that** the configuring module is further configured to:
receive capability information about whether the specified information field in the DCI is supported transmitted by the terminal device; and
configure, in a case that the capability information indicates that the specified information field in the DCI is supported by the terminal device, the indication information based on the specified information field in the DCI.

103. The apparatus according to claim 99, **characterized in that** the indication information includes the TCI state configuration, and the configuring module is specifically configured to:
configure, when configuring TCI states through radio resource control (RRC) signaling, an associated SRS resource set index for each TCI state; or,
configure, when activating TCI states through a media access control unit (MAC CE), an SRS resource set index associated with the TCI state; or,
associate each TCI state indicated in the DCI with one SRS resource set index respectively.

104. The apparatus according to claim 98, **characterized in that** the configuring module is further configured to:
configure at least two physical uplink shared channel (PUSCH) transmission parameters for the terminal device, wherein values of the at least two PUSCH transmission parameters are the same or different.

105. The apparatus according to claim 98, **characterized in that** the configuring module is further configured to:
configure CG indexes of other associated CGs in a CG configuration.

106. A processor readable storage medium, storing a computer program, **characterized in that** the computer program is used to enable a processor to execute the method according to any one of claims 1-35.
